# EUROPEAN PATENT APPLICATION

(11) **EP 1 528 522 A2**
(43) Date of publication of application: **04.05.2005**
(21) Application number: 04256462.5
(22) Date of filing: 20.10.2004
(51) Int. Cl.: G08C 17/00

(54) **Remote controlled apparatus, remote control apparatus, and control method for remote control system**

(30) Priority: 31.10.2003 JP 2003373177
(71) Applicant: Omron Corporation, Kyoto-shi, Kyoto 600-8530 (JP)
(72) Inventor: Ota, Shunji, Shimogyo-ku Kyoto-sho, Kyoto, 600-8530 (JP); Mukaigawa, Shinichi, Shimogyo-ku Kyoto-sho, Kyoto, 600-8530 (JP); Takeuchi, Hisashi, Shimogyo-ku Kyoto-sho, Kyoto, 600-8530 (JP); Kobayashi, Hideyuki, Shimogyo-ku Kyoto-sho, Kyoto, 600-8530 (JP); Kubota, Masazumi, Shimogyo-ku Kyoto-sho, Kyoto, 600-8530 (JP)
(74) Representative: Calderbank, Thomas Roger

(57) **Abstract**

It is an object of the invention to prevent an inconsistency from occurring between settings in a main body apparatus and plural remote controllers in a remote control system in which a setting of the main body apparatus can be changed from the remote controllers. The remote control system includes: the main body apparatus that performs a predetermined operation; and the plural remote controllers that changes a setting in the main body apparatus from remote locations. The main body apparatus includes: a changing apparatus holding unit that stores apparatus identification information, which is capable of specifying a remote controller that has changes a setting to a present setting, in a main body side storage unit; a main body side communication possibility judging unit that judges whether communication with the other remote controllers excluding the remote controller, which has changed the setting to the present setting, is possible; and a setting notifying unit that, when communication with the other remote controllers has become possible, transmits setting information indicating a setting state of the main body apparatus to the remote controllers.

## Description

The present invention relates to a main body apparatus, a remote control apparatus, and a control method for a remote control system including plural remote control apparatuses (remote controllers) for changing a setting in a main body apparatus that performs a predetermined operation.

In recent years, in accordance with an increase in losses due to burglary in cars and theft of cars, necessity for a vehicle security apparatus has been rapidly increasing. As a vehicle security apparatus most widely available in the market, there is a vehicle security apparatus of a type that includes a function for detecting abnormality of a vehicle such as illegal opening of a door or tilt of a vehicle and, when abnormality occurs, threats an intruder into the vehicle usingasiren. As a more expensive vehicle security apparatus, there is a vehicle security apparatus of a type that transmits an abnormality signal to an operation center simultaneously with detection of occurrence of the abnormality.

In "ATOZ FORCE 2000", [online], [retrieved on October 17, 2003], Internet, <URL: http://www.kami-station.co.jp/security/F2000/index.htm>, a vehicle security system including a remote controller for operating a main body apparatus attached to a vehicle is described. In this vehicle security system, a security level of the main body apparatus can be set from the remote controller. In addition, when the main body apparatus detects abnormality, in the case in which the remote controller is within a communication zone, the main body apparatus informs the remote controller of a risk level on a real time basis. On the other hand, in the case in which the remote controller is not within the communication zone, when communication is established, the main body apparatus can confirm using the remote controller that abnormality occurred at the time when the remote controller was out of the communication zone. In addition, the main body apparatus indicates whether reception is possible with "out-of-zone indication".

In "a security apparatus preventing theft of a car (car security) Marksman Security System", [online], Marksman, [retrieved on October 17, 2003], Internet, <URL: http://www.south.ne.jp/∼marksman/lineup.html>, a vehicle security system, in which a main body apparatus and a remote controller are capable of communicating with each other, is described. In this vehicle security system, an operation state of the main body apparatus and generation of an alarm is sent to the remote controller by answerback according to mutual communication between the main body apparatus and the remote controller. In addition, even in the case in which the main body apparatus has detected abnormality, on a vehicle side, it is possible to inform only the remote controller of generation of an alarm without generating an alarm in a form of a siren or a light flash. Note that this reference mentions that plural main body apparatuses are registered for one remote controller to control the main body apparatuses mounted on plural cars, respectively.

In addition, there are vehicle security systems that include plural remote controllers for operating a main body apparatus attached to a vehicle as described in the above-mentioned references as well as the following three references:"SUPERBARRICADO", [online],Car Mate, [retrieved on October 17, 2003], Internet, URL:http://www.carmate.co.jp/networkbarricado/super/sq50 00.html, "HORNET 719G", [online], Kato Denki, [retrieved on October 17, 2003], Internet, URL:http:www.kato-denki.com/products/hornet/719g.html, and "HORNET 728M", [online] , Kato Denki, [retrieved on October 17, 2003], Internet, URL:http://www.kato-denki.com/products/hornet/728m.html.

However, in the conventional vehicle security system including plural remote controllers, there is a problem in that a setting in a main body apparatus and settings stored in remote controllers as a result of change differ from each other.

In the case in which one remote controller is used, completion of an operation by the remote controller can be confirmed through two-way communication between the remote controller and a main body apparatus. However, in the case in which plural remote controllers are used, it is difficult to always synchronize a setting in a main body apparatus and a setting in a remote controller out of a communication zone because the setting in the main body apparatus can also be changed by the other remote controllers. Thus, it is likely that an inconsistency occurs between the setting in the main body apparatus and the setting in the remote controller.

If the setting in the main body apparatus and the setting in the remote controller differ from each other in this way, not only inconvenience but also an accident may be caused. Thus, it is desired to solve this problem. Note that, even if a user uses a remote controller that does not store a setting, since the user remembers a setting made by the user himself/herself, when the setting is changed to a different setting in another remote controller, it is not preferable not to notify the user of the change.

The invention has been devised in the light of the above-mentioned problems, and the invention seeks to, in a remote control system in which a setting in a main body apparatus can be changed from plural remote controllers, provide a main body apparatus, a remote control apparatus, and a control method for the remote control system that may prevent an inconsistency from occurring between a setting in the main body apparatus and settings in the respective remote controllers.

A main body apparatus for a remote control system in accordance with the invention is a main body apparatus for a remote control system including a main body apparatus that performs a predetermined operation and plural remote control apparatuses that change a setting in the main body apparatus from remote locations, characterized by including: a changing apparatus holding unit that stores apparatus identification information, which is capable of specifying a remote control apparatus that has changed a setting to a present setting, in a storage unit; a communication possibility judging unit that judges whether communication with the other remote control apparatuses excluding the remote control apparatus, which has changed the setting to the present setting, is possible; and a setting notifying unit that, when communication with the other remote control apparatuses has become possible, transmits setting information indicating a setting state of the main body apparatus itself to the remote control apparatuses.

A remote control apparatus for a remote control system in accordance with the invention is a remote control apparatus for a remote control system including a main body apparatus that performs a predetermined operation and plural remote control apparatuses that change a setting in the main body apparatus from remote locations, characterized by including: a setting acquiring unit that receives setting information indicating a setting state of the main body apparatus from the main body apparatus; and a presentation unit that presents the setting information to a user.

A remote control apparatus for a remote control system in accordance with the invention is a remote control apparatus for a remote control system including a main body apparatus that performs a predetermined operation and plural remote control apparatuses that change a setting in the main body apparatus from remote locations, characterized by including: a setting acquiring unit that receives setting information indicating a setting state of the main body apparatus from the main body apparatus; and a setting managing unit that stores the setting information in a storage unit.

A control method for a remote control system in accordance with the invention is a control method for a remote control system including a main body apparatus that performs a predetermined operation and plural remote control apparatuses that change a setting in the main body apparatus from remote locations, characterized by including: a changing apparatus holding step of storing apparatus identification information capable of specifying a remote control apparatus that has changed a setting to a present setting; a communication possibility judging step of judging whether communication between the main body apparatus and the other remote control apparatuses excluding the remote control apparatus, which has changed the setting to the present setting, is possible; and a setting notifying step of, when communication with the other remote control apparatuses has become possible, transmitting setting information indicating a setting state of the main body apparatus to the remote control apparatuses.

A main body apparatus for a remote control system in accordance with the invention is a main body apparatus for a remote control system including a main body apparatus that performs a predetermined operation and plural remote control apparatuses that change a setting in the main body apparatus from remote locations, characterized by including: a setting notification request acquiring unit that receives a notification request for setting information indicating a setting state of the main body apparatus itself from a remote control apparatus; and a setting notifying unit that, when the notification request for setting information is received by the setting notification request acquiring unit from a remote control apparatus, transmits the setting information to the remote control apparatus.

A remote control apparatus for a remote control system in accordance with the invention is a remote control apparatus for a remote control system including a main body apparatus that performs a predetermined operation and plural remote control apparatuses that change a setting in the main body apparatus from remote locations, characterized by including: a setting notification requesting unit that transmits a notification request for setting information indicating a setting state of the main body apparatus to the main body apparatus; and a setting acquiring unit that receives the setting information from the main body apparatus.

The remote control apparatus for a remote control system in accordance with the invention is characterized by further including a presentation unit that presents the setting information received from the main body apparatus to a user.

The remote control apparatus for a remote control system in accordance with the invention is characterized by further including a setting managing unit that stores the setting information received from the main body apparatus in a storage unit.

A control method for a remote control system in accordance with the invention is a control method for a remote control system including a main body apparatus that performs a predetermined operation and plural remote control apparatuses that change a setting in the main body apparatus from remote locations, characterized by including: a setting notification requesting step of transmitting a notification request for setting information indicating a setting state of the main body apparatus from a remote control apparatus to the main body apparatus; and a setting notifying step of transmitting the setting information from the main body apparatus to the remote control apparatus.

A main body apparatus for a remote control system in accordance with the invention is a main body apparatus for a remote control system including a main body apparatus that performs a predetermined operation and plural remote control apparatuses that change a setting in the main body apparatus from remote locations, characterized by including: a communication possibility judging unit that judges whether communication with the remote control apparatuses is possible; and a setting changing unit that, when a state in which communication with any one of the remote control apparatuses is impossible continues for a predetermined time, changes the setting in the main body apparatus itself to a defined value setting determined in advance.

A remote control apparatus for a remote control system in accordance with the invention is a remote control apparatus for a remote control system including a main body apparatus that performs a predetermined operation and plural remote control apparatuses that change a setting in the main body apparatus from remote locations, characterized by including: a communication possibility judging unit that judges whether communication with the main body apparatus is possible; and a presentation unit that, when a state inwhich it is impossible to communicate with the main body apparatus continues for a predetermined time, presents an indication that the setting in the main body apparatus has been changed to a defined value setting determined in advance to a user.

A remote control apparatus for a remote control system in accordance with the invention is a remote control apparatus for a remote control system including a main body apparatus that performs a predetermined operation and plural remote control apparatuses that change a setting in the main body apparatus from remote locations, characterized by including: a communication possibility judging unit that judges whether communication with the main body apparatus is possible; and a setting managing unit that, when a state in which it is impossible to communicate with the main body apparatus continues for a predetermined time, stores a defined value setting determined in advance in a storage unit as setting information indicating a setting state of the main body apparatus.

A control method for a remote control system in accordance with the invention is a control method for a remote control system including a main body apparatus that performs a predetermined operation and plural remote control apparatuses that change a setting in the main body apparatus from remote locations, characterized by including: a communication possibility judging step of judging whether communication between the main body apparatus and the remote control apparatuses is possible; and a setting changing step of, when a state in which communication between the main body apparatus and any one of the remote control apparatuses is impossible continues for a predetermined time, changing the setting in the main body apparatus to a defined value setting determined in advance.

A remote control apparatus for a remote control system in accordance with the invention is a remote control apparatus for a remote control system including a main body apparatus that performs a predetermined operation and plural remote control apparatuses that change a setting in the main body apparatus from remote locations, characterized by including: a change order managing unit that stores change order information, which is capable of specifying a sequencing relation between a change made by the remote control apparatus itself and a change made by another remote control apparatus, in a storage unit; a change order information exchanging unit that exchanges the change order information with the another control apparatus; a change order comparing unit that specifies a sequencing relation between a change made by the remote control apparatus itself and a change made by the another remote control apparatus on the basis of the change order information; and a presentation unit that, when the change made by the another remote control apparatus is later than the change made by the remote control apparatus itself, presents an indication that the setting in the main body apparatus has been changed by the another remote control apparatus to a user.

A remote control apparatus for a remote control system in accordance with the invention is a remote control apparatus for a remote control system including a main body apparatus that performs a predetermined operation and plural remote control apparatuses that change a setting in the main body apparatus from remote locations, characterized by including: a change order managing unit that stores change order information, which is capable of specifying a sequencing relation between a change made by the remote control apparatus itself and a change made by another remote control apparatus, in a storage unit together with setting information indicating a setting state of the main body apparatus according to the change made by the remote control apparatus itself; a change order information exchanging unit that exchanges the change order information with the another remote control apparatus; a change order comparing unit that specifies a sequencing relation between a change made by the remote control apparatus itself and a change made by the another remote control apparatus on the basis of the change order information; and a setting information correcting unit that, when the change made by the another remote control apparatus is later than the change made by the remote control apparatus itself, updates the setting information and the change order information in the storage unit according to setting information and change order information in the remote control apparatus.

A control method for a remote control system in accordance with the invention is a control method for a remote control system including a main body apparatus that performs a predetermined operation and plural remote control apparatuses that change a setting in the main body apparatus from remote locations, characterized by including: a change order managing step of, in each of the remote control apparatuses, storing change order information, which is capable of specifying a sequencing relation between a change made by the remote control apparatus itself and a change made by another remote control apparatus; a change order information exchanging step of, in each of the remote control apparatuses, exchanging the change order information with the another remote control apparatus; and a change order comparing step of, in each of the remote control apparatuses, specifying a sequencing relation between a change made by the remote control apparatus itself and a change made by the another remote control apparatus on the basis of the change order information.

A main body apparatus for a remote control system in accordance with the invention is a main body apparatus for a remote control system including a main body apparatus that performs a predetermined operation and plural remote control apparatuses that change a setting in the main body apparatus from remote locations, characterized by including: a priority holding unit that stores a priority given to a remote control apparatus, which has changed a setting to a present setting, in a storage unit; and a priority comparing unit that, when a request for a setting change is received froma remote control apparatus, compares a priority given to the remote control apparatus and the priority stored in the storage unit and permits the setting change only when the priority given to the remote control apparatus is higher.

A control method for a remote control system in accordance with the invention is a control method for a remote control system including a main body apparatus that performs a predetermined operation and plural remote control apparatuses that change a setting in the main body apparatus from remote locations, characterized by including: a priority holding step of storing a priority given to a remote control apparatus that has changed a setting to a present setting; and a priority comparing step of, when the main body apparatus receives a request for a setting change from a remote control apparatus, compares a priority given to the remote control apparatus and the priority stored in the storage unit and permits the setting change only when the priority given to the remote control apparatus is higher.

A main body apparatus for a remote control system in accordance with the invention is a main body apparatus for a remote control system including a main body apparatus that performs a predetermined operation and plural remote control apparatuses that change a setting in the main body apparatus from remote locations, a range of a setting changeable from the remote control apparatus having been set as an authority in each of the remote control apparatuses, characterized by including: an authority judging unit that, when a request for a setting change is received froma remote control apparatus, permits the change when the remote control apparatus has an authority for the change; and a setting change unit that changes the setting when the change is permitted by the authority judging unit.

A control method for a remote control system in accordance with the invention is a control method for a remote control system including a main body apparatus that performs a predetermined operation and plural remote control apparatuses that change a setting in the main body apparatus from remote locations, characterized by including: an authority setting step of setting, in each of the remote control apparatuses, a range of setting changeable from the remote control apparatus as an authority; an authority judging step of, when the main body apparatus receives a request for a setting change from a remote control apparatus, permitting the change when the remote control apparatus has an authority for the change; and a setting change step of changing the setting when the change is permitted in the authority judging step.

A main body apparatus for a remote control system in accordance with the invention is a main body apparatus for a remote control system including a main body apparatus that performs a predetermined operation and plural remote control apparatuses that change a setting in the main body apparatus from remote locations, characterized by including: a distance measuring unit that measures a distance between a remote control apparatus, which has transmitted a request for a setting change, and the main body apparatus itself; a distance judging unit that, when requests for a setting change are received from the plural remote control apparatuses, specifies a remote control apparatus closest to the main body apparatus itself; and a setting changing unit that changes the setting in accordance with the request for a setting change from the closest remote control apparatus specified by the distance judging unit.

A control method for a remote control system in accordance with the invention is a control method for a remote control system including a main body apparatus that performs a predetermined operation and plural remote control apparatuses that change a setting in the main body apparatus from remote locations, characterized by including: a distance measuring step of measuring a distance between a remote control apparatus, which has transmitted a request for a setting change, and the main body apparatus; a distance judging step of, when requests for a setting change are received from the plural remote control apparatuses, specifying a remote control apparatus closest to the main body apparatus; and a setting changing step of changing the setting in accordance with the request for a setting change from the closest remote control apparatus specified in the distance judging step.

A main body apparatus for a remote control system in accordance with the invention is a main body apparatus for a remote control system including a main body apparatus that performs a predetermined operation and plural remote control apparatuses that change a setting in the main body apparatus from remote locations, characterized by including: a request counting unit that holds requests for a setting change received from the remote control apparatuses and permits the setting change when a predetermined number of requests for a setting change with the identical contents are collected; and a setting changing unit that changes the setting when the change is permitted by the request counting unit.

A control method for a remote control system in accordance with the invention is a control method for a remote control system including a main body apparatus that performs a predetermined operation and plural remote control apparatuses that change a setting in the main body apparatus from remote locations, characterized by including: a request counting step of holding requests for a setting change received from the remote control apparatuses in the main body apparatus and permitting the setting change when a predetermined number of requests for a setting change with the identical contents are collected; and a setting changing step of changing the setting when the change is permitted in the request counting step.

In the accompanying drawings:
Fig. 1 is a functional block diagram schematically showing structures of a main body apparatus and remote controllers for a remote control system in accordance with an embodiment of the invention;
Figs. 2A to 2C are explanatory diagrams showing operations of the remote control system shown in Fig. 1;
Figs. 3A and 3B are explanatory diagrams showing operations of the remote control system shown in Fig. 1;
Fig. 4 is a functional block diagram schematically showing structures of a main body apparatus and remote controllers for a remote control system in accordance with an embodiment of the invention;
Figs. 5A and 5B are explanatory diagrams showing operations of the remote control system shown in Fig. 4;
Fig. 6 is a functional block diagram schematically showing structures of a main body apparatus and remote controllers for a remote control system in accordance with an embodiment of the invention;
Figs. 7A and 7B are explanatory diagrams showing operations of the remote control system shown in Fig. 6;
Fig. 8 is a functional block diagram schematically showing structures of a main body apparatus and remote controllers for a remote control system in accordance with an embodiment of the invention;
Figs. 9A to 9C are explanatory diagrams showing operations of the remote control system shown in Fig. 8;
Fig. 10 is a functional block diagram schematically showing structures of a main body apparatus and remote controllers for a remote control system in accordance with an embodiment of the invention;
Fig. 11 is an explanatory diagram showing operations of the remote control system shown in Fig. 10;
Fig. 12 is a functional block diagram schematically showing structures of a main body apparatus and remote controllers for a remote control system in accordance with an embodiment of the invention;
Fig. 13 is an explanatory diagram showing a specific example of an operation authority table that is used in the remote control system shown in Fig. 12;
Figs. 14A and 14B are explanatory diagrams showing operations of the remote control system shown in Fig. 12;
Fig. 15 is a functional block diagram schematically showing structures of a main body apparatus and remote controllers for a remote control system in accordance with an embodiment of the invention;
Fig. 16 is an explanatory diagram showing operations of the remote control system shown in Fig. 15;
Fig. 17 is a functional block diagram schematically showing structures of a main body apparatus and remote controllers for a remote control system in accordance with an embodiment of the invention; and
Figs. 18A and 18B are explanatory diagrams showing operations of the remote control system shown in Fig. 17.

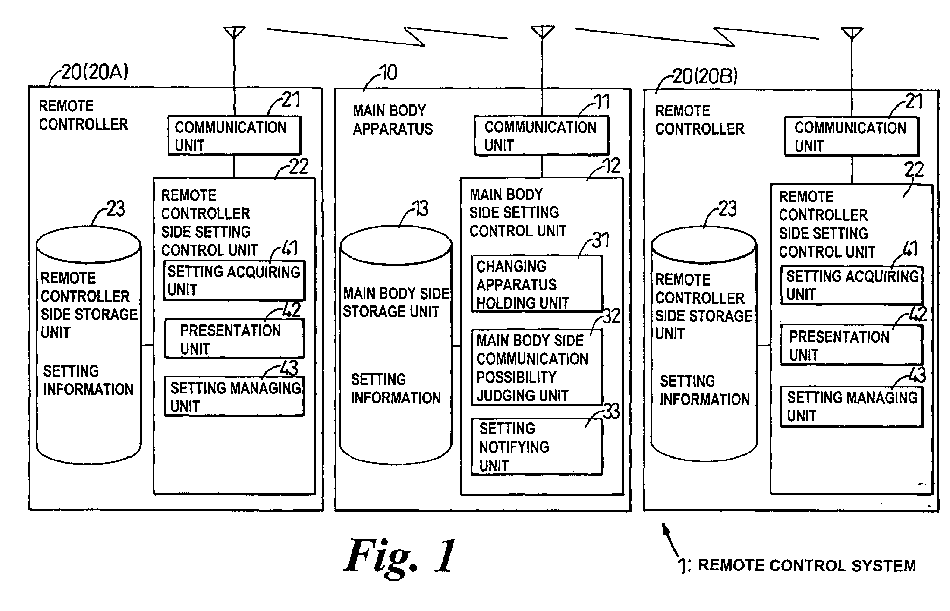

Embodiments of the invention will be hereinafter explained with reference to Figs. 1 to 18.

Fig. 1 is a functional block diagram schematically showing a structure of a remote control system 1 in accordance with the embodiment.

As shown in Fig. 1, the remote control system 1 includes a main body apparatus 10 that performs a predetermined operation and plural remote controllers (remote control apparatuses) 20 ··· (20A and 20B) that change a setting in the main body apparatus 10 from remote locations. Note that, although two remote controllers 20 are shown in Fig. 1, the number of remote controllers may be three or more.

The main body apparatus 10 includes at least a communication unit 11 that performs radio communication with the remote controllers 20, a main body side setting control unit 12 that controls setting for the main body apparatus 10, and a main body side storage unit (storing means) 13 that stores setting information indicating a setting state of the main body apparatus 10 and information to be used for setting control. Further, the main body side setting control unit 12 includes a changing apparatus holding unit 31, a main body side communication possibility judging unit 32, a setting notifying unit 33, a setting notification request acquiring unit 34, a setting changing unit 35, a priority holding unit 61, a priority comparing unit 62, an authority judging unit 63, a distance measuring unit 64, a distance judging unit 65, and a request counting unit 66. However, blocks corresponding to functions, which are not implemented, among functions (1-1) to (2-4) to be described later can be omitted (Figs. 1, 4, 6, 8, 10, 12, 15, and 17).

The remote controllers 20 include at least a communication unit 21 that performs radio communication with the main body apparatus 10, a remote controller side setting control unit 22 that performs control for storing a setting state of the main body apparatus 10 so as not to differ from an actual state, and a remote controller side storage unit (storing means) 23 that stores setting information indicting the setting state of the main body apparatus 10 and information on a change made by the remote controller 20. Further, the remote controller side setting control unit 22 includes a setting acquiring unit 41, a presentation unit 42, a setting managing unit 43, a setting notification requesting unit 44, a remote controller side communication possibility judging unit 45, a change order managing unit 46, a change order information exchanging unit 47, a change order comparing unit 48, and a setting information correcting unit 49. However, blocks corresponding to functions, which are not implemented, among functions (1-1) to (2-4) to be described later can be omitted (Figs. 1, 4, 6, 8, 10, 12, 15, and 17). Note that a display panel, a speaker, and an operation button, and the like (not shown) serving as a user interface are provided in the remote controllers 20.

Fig. 1 shows blocks for a setting change and synchronization of setting information, and other functional blocks are omitted. In other words, although not shown in Fig. 1 for example, in the case in which the remote control system 1 is a vehicle security system, the main body apparatus 10 includes a function for performing an operation for security, the remote controllers 20 include a function for receiving a signal, which is transmitted by the main body apparatus 10 at the time when abnormality is detected, and issuing an alarm to a user.

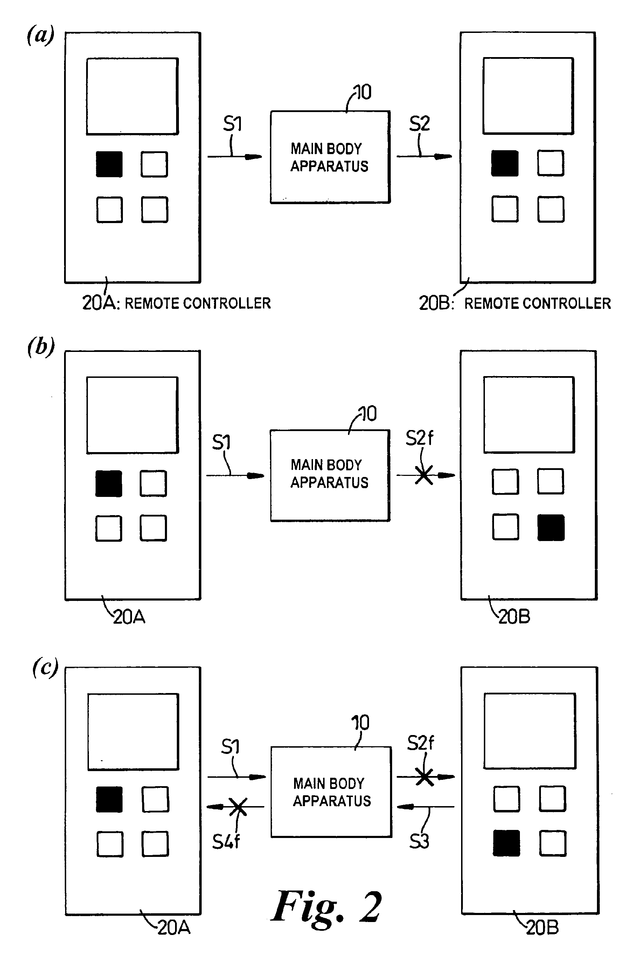

Here, a pattern in which settings differ between the main body apparatus 10 and the remote controllers 20 in the remote control system 1 will be explained with reference to Figs. 2A to 2C.

Fig. 2A shows a normal pattern in which settings do not differ between the main body apparatus 10 and the remote controllers 20. First, the remote controller 20A transmits setting information to the main body apparatus 10 to change a setting in the main body apparatus 10 (S1). At this point, the main body apparatus 10 transmits setting information (which may be the same as the setting information received from the remote controller 20A) indicating a changed state to the other remote controller 20B. Then, the other remote controller 20B rewrites a record of the remote controller 20B itself according to the setting information received from the main body apparatus 10. Consequently, a setting in the main body apparatus 10, a setting stored in the remote controller 20A, and a setting stored in the remote controller 20B are consistent with one another.

Fig. 2B shows a pattern in which settings differ between the main body apparatus 10 and the remote controllers 20. First, the remote controller 20A transmits setting information to the main body apparatus 10 to change a setting in the main body apparatus 10 (S1). At this point, it is assumed that the main body apparatus 10 performs processing for transmitting setting information indicating a changed state to the other remote controller 20B but fails to transmit the setting information (S2f). As a result, the other remote controller 20B cannot receive setting information indicating a present setting state from the main body apparatus 10, and a setting in the main body apparatus 10 and a setting stored in the remote controller 20A differ from a setting stored in the remote controller 20B.

Thereafter, as shown in Fig. 2C, the remote controller 20B transmits setting information to the main body apparatus 10 to change a setting in the main body apparatus 10 (S3). In this case, it is assumed that the main body apparatus 10 performs processing for transmitting setting information indicating a change state but fails to transmit the setting information (S4f). As a result, the other remote controller 20A cannot receive setting information indicating a present setting state from the main body apparatus 10, and a setting in the main body apparatus 10 and a setting stored in the remote controller 20B differ from a setting stored in the remote controller 20A. In other words, a setting made by a user of the remote controller 20A is changed while the user does not notice the change.

### [1] Correct a difference in states of the main body apparatus and the remote controllers

In the remote control system 1, a difference in setting information of the main body apparatus 10 and the remote controllers 20 is corrected as indicated by the following (1-1) to (1-4). Note that, in the following explanation, it is assumed that the remote controller 20, which has changed the setting of the main body apparatus 10 lastly, is the remote controller 20A, and the other remote controllers 20 are the remote controllers 20B.

### (1-1) When a main body apparatus and a remote controller have become capable of communicating with each other, a setting in the main body apparatus is notified to the remote controller

In this case, as shown in Fig. 1, the main body apparatus 10 and the remote controllers 20 specifically have structures described below.

The main body apparatus 10 includes at least the changing apparatus holding unit (changing apparatus holding means) 31, the main body side communication possibility judging unit (communication possibility judging means) 32, and the setting notifying unit (setting notifying means) 33 in the main body side setting control unit 12.

The changing apparatus holding unit 31 stores apparatus identification information, which is capable of specifying the remote controller 20A that has changed a setting to a present setting, in the main body side storage unit 13.

The main body side communication possibility judging unit 32 judges whether it is possible to communicate with the other remote controllers 20B excluding the remote controller 20A that has changed a setting to a present setting.

When communication with the other remote controllers 20B has become possible, the setting notifying unit 33 transmits setting information indicating a setting state of the main body apparatus 10 to the other remote controllers 20B.

It is also possible that, in the main body apparatus 10, a change set lastly is stored for each of the remote controllers 20, possibility of communication with the remote controllers 20 having a present setting different from the setting is judged, and setting information is transmitted only to those remote controllers 20.

In addition, the remote controllers 20 include at least the setting acquiring unit (setting acquiring means) 41, the presentation unit (presentation means) 42, and the setting managing unit (setting managing means) 43 in the remote controller side setting control unit 22.

The setting acquiring unit 41 receives setting information indicating a setting state of the main body apparatus 10 from the main body apparatus 10.

The presentation unit 42 presents setting information to a user using a display panel, an LED, or the like.

The setting managing unit 43 stores setting information in the remote controller side storage unit 23.

The remote controller side storage unit 23 stores setting information indicating a setting state of the main body apparatus 10. However, although setting information in the main body side storage unit 13 is always consistent with a setting state of the main body apparatus 10, setting information in the remote controller side storage unit 23 may differ from an actual setting state of the main body apparatus 10 according to circumstances.

With the above-mentioned structure, the remote control system 1 stores apparatus identification information that is capable of identifying the remote controller 20A that has changed a setting to a present setting (changing apparatus holding step) , judges whether communication between the other remote controllers 20B excluding the remote controller 20A, which has changed a setting to a present setting, and the main body apparatus 10 is possible (communication possibility judging step) , and when communication between the other remote controllers 20B and the main body apparatus 10 has become possible, transmits setting information indicating a setting state of the main body apparatus 10 to the remote controllers 20B (setting notifying step).

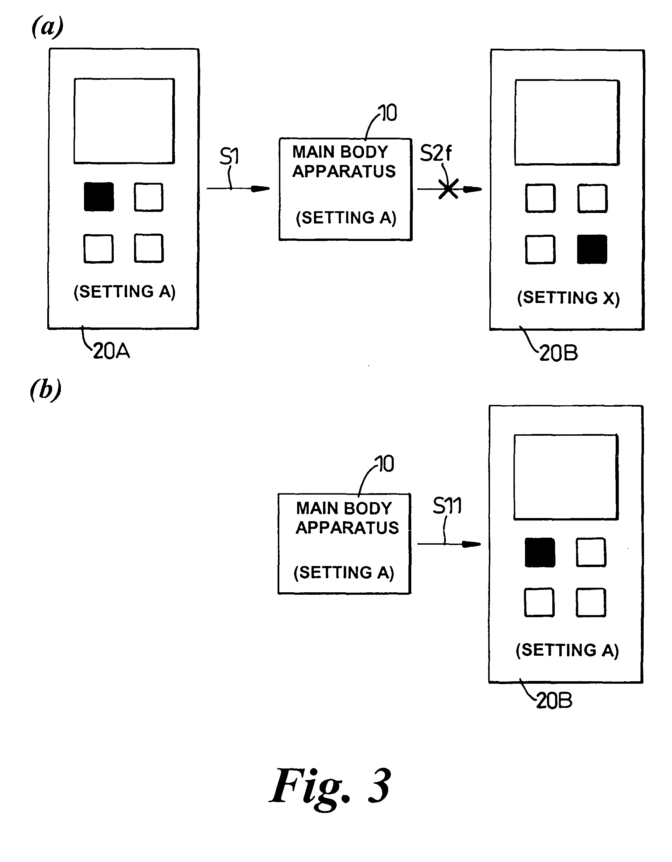

Here, examples of an operation with the above-mentioned structure will be explained with reference to Fig. 3.

First, the remote controller 20A transmits a setting A to the main body apparatus 10, and the main body apparatus 10 stores the setting A (S1). At this point, since the main body apparatus 10 attempts to transmit the setting A to the remote controller 20B but fails in the transmission, an inconsistency occurs (S2f). Thus, a setting in the remote controller 20B is not changed to the setting A.

Next, the main body apparatus 10 detects that communication with the remote controller 20B has become possible and transmits the setting A to the remote controller 20B. The setting A is overwritten on the setting in the remote controller 20B. Thus, the inconsistency of the setting in the main body apparatus 10 and the setting in the remote controller 20B can be eliminated.

Note that, when the setting A is transmitted to the remote controller 20B, the remote controller 20B (a) may present an indication of an inconsistency to a user to cause the user to select a measure, (b) may write back the setting in the remote controller 20B to the main body apparatus 10 (the remote controller 20B takes priority), or (c) may compare a time of day of the received setting A and a time of day of a stored setting X to give priority to the latest one.

### (1-2) When a user performs a specific operation using a remote controller, a setting in a main body apparatus is notified to the remote controller

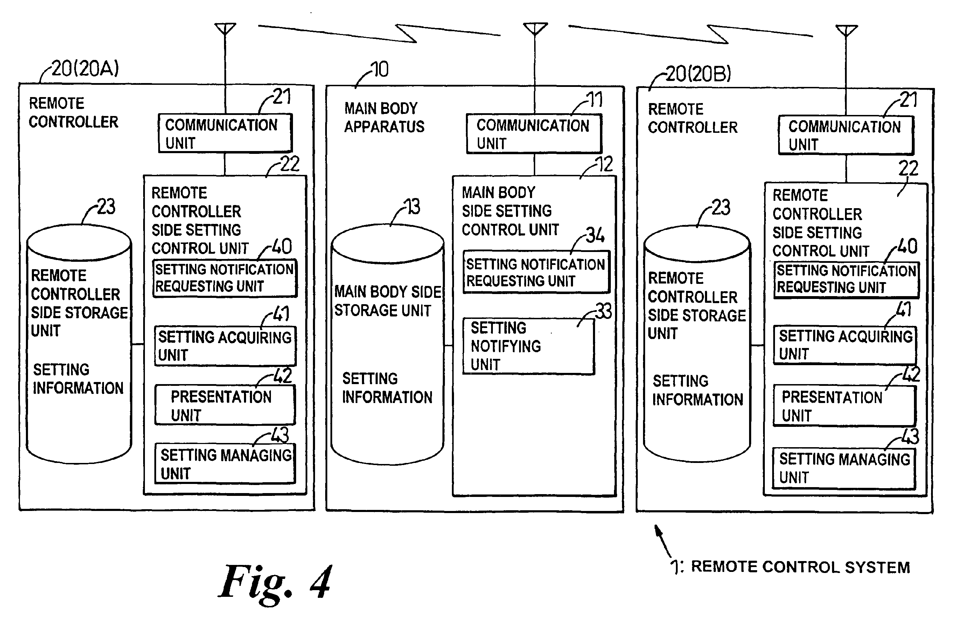

In this case, as shown in Fig. 4, the main body apparatus 10 and the remote controllers 20 specifically have structures described below.

The main body apparatus 10 includes at least the setting notification request acquiring unit (setting notification request acquiring means) 34 and the setting notifying unit (setting notifying means) 33 in the main body side setting control unit 12.

The setting notification request acquiring unit 34 receives notification requests for setting information indicating a setting state of the main body apparatus 10 from the remote controllers 20.

When the setting notification request acquiring unit 34 receives the notification requests for setting information from the remote controllers 20, the setting notifying unit 33 transmits the setting information to the remote controllers 20.

The remote controller 20 includes at least the setting notification requesting unit (setting notification requesting means) 44, the setting acquiring unit (setting acquiring means) 41, the presentation unit (presentation means) 42, and the setting managing unit (setting managing means) 43 in the remote controller side setting control unit 22.

The setting notification request unit 44 transmits a notification request for setting information indicating a setting state of the main body apparatus 10 to the main body apparatus 10.

The setting acquiring unit 41 receives setting information from the main body apparatus 10.

The presentation unit 42 presents the setting information received from the main body apparatus 10 to a user using a display panel, an LED, or the like.

The setting managing unit 43 stores the setting information received from the main body apparatus 10 in the remote controller side storage unit 23.

The remote controller side storage unit 23 stores the setting information indicating the setting state of the main body apparatus 10. However, although setting information in the main body side storage unit 13 is always consistent with a setting state of the main body apparatus 10, setting information in the remote controller side storage unit 23 may differ from an actual setting state of the main body apparatus 10 according to circumstances.

With the above-mentioned structure, the remote control system 1 transmits a notification request for setting information indicating a setting state of the main body apparatus 10 from the remote controllers 20 to the main body apparatus 10 (setting notification requesting step) and transmits the setting information from the main body apparatus 10 to the remote controllers 20 (setting notifying step).

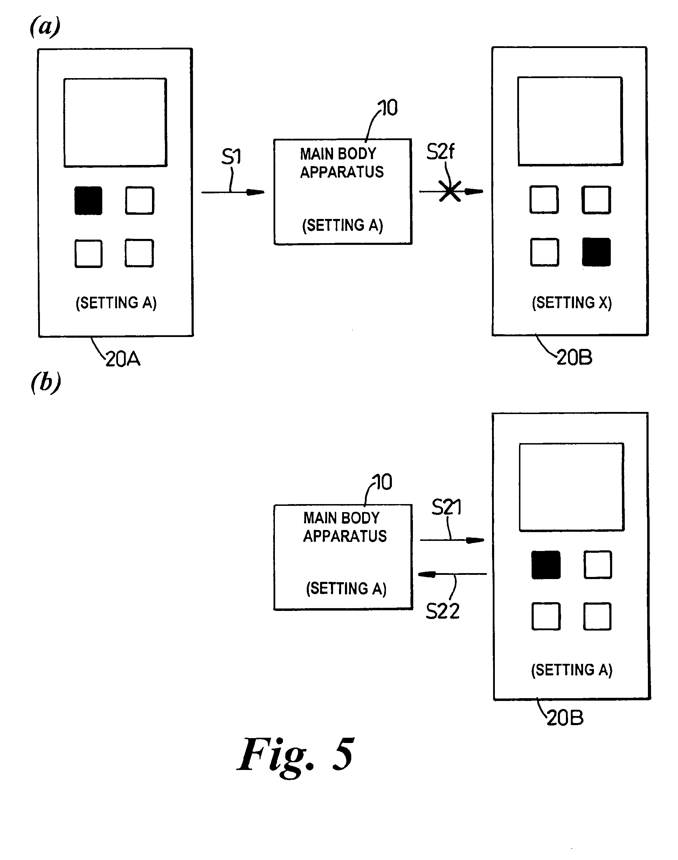

Here, examples of an operation with the above-mentioned structure will be explained with reference to Fig. 5.

First, the remote controller 20A transmits a setting A to the main body apparatus 10, and the main body apparatus 10 stores the setting A (S1). At this point, since the main body apparatus 10 attempts to transmit the setting A to the remote controller 20B but fails in the transmission, an inconsistency occurs (S2f). Thus, a setting in the remote controller 20B is not changed to the setting A.

Next, the remote controller 20B transmits a notification request for setting information to the main body apparatus 10 according to an operation by a user (S21) and stores the acquired setting A (S22). Thus, the inconsistency between a setting in the main body apparatus 10 and a setting in the remote controller 20B can be eliminated.

Note that, when the setting A is transmitted to the remote controller 20B, the remote controller 20B (a) may issue a comparison order for comparing settings in the remote controller 20A and the main body apparatus 10 to find whether the settings are consistent and, after presenting a result of the comparison to a user, leave a measure to be taken to the user or (b) may issue a setting readout order to the main body apparatus 10 and compare a time of day of the setting A and a time of day of a setting X to give priority to the latest one.

### (1-3) When a state in which a main body apparatus and a remote controller cannot communicate continues for a fixed time, to settings in the main body apparatus and the remote controller are changed to a defined value

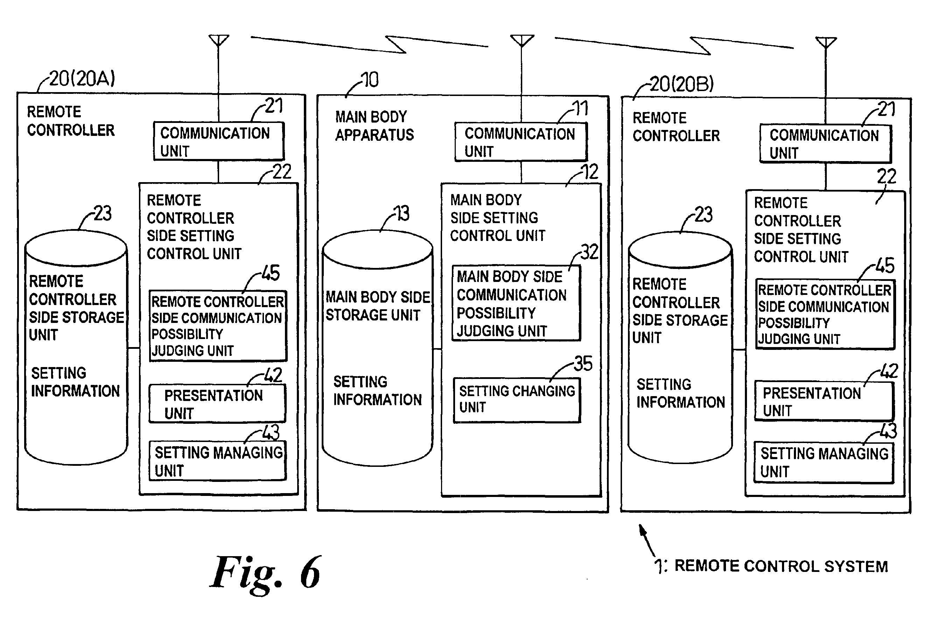

In this case, as shown in Fig. 6, the main body apparatus 10 and the remote controllers 20 specifically have structures described below.

The main body apparatus 10 includes at least the main body side communication possibility judging unit (communication possibility judging means) 32 and the setting changing unit (setting changing means) 35 in the main body side setting control unit 12.

The main body side communication possibility judging unit 32 judges whether communication with the remote controllers 20 is possible.

When a state in which communication with one of the remote controllers 20 is impossible continues for a predetermined time, the setting changing unit 35 changes a setting in the main body apparatus 10 to a defined value setting determined in advance. Note that contents of the defined setting, which should be stored as setting information, are stored in the main body side storing unit 13 in advance.

The remote controllers 20 include at least the remote controller side communication possibility judging unit (communication possibility judging means) 45, the presentation unit (presentation means) 42, and the setting managing unit (setting managing means) 43 in the remote controller side setting control unit 22.

The remote controller side communication possibility judging unit 45 judges whether communication with the main body apparatus 10 is possible.

When a state in which communication with the main body apparatus 10 is impossible continues for a predetermined time, the presentation unit 42 presents an indication that the setting in the main body apparatus 10 has been changed to the defined value setting determined in advance to a user using a display panel, an LED, or the like.

When a state in which communication with the main body apparatus 10 is impossible continues for a predetermined time, the setting managing unit 43 stores the defined value setting determined in advance in the remote controller side storage unit 23 as setting information indicating a setting state of the main body apparatus 10. Note that contents of the defined value setting, which should be stored as the setting information, are stored in the remote controller side storage unit 23 in advance.

The remote controller side storage unit 23 stores the setting information indicating the setting state of the main body apparatus 10. However, although setting information in the main body side storage unit 13 is always consistent with a setting state of the main body apparatus 10, setting information in the remote controller side storage unit 23 may differ from an actual setting state of the main body apparatus 10 according to circumstances.

Here, as the defined value setting, a setting selected by the user in advance may be used or a most general setting or a safest setting may be used.

With the above-mentioned structure, the remote control system 1 judges whether communication between the main body apparatus 10 and the remote controller 20 is possible (communication possibility judging step) and, when a state in which communication between the main body apparatus 10 and one of the remote controllers 20 is impossible continues for a predetermined time, changes a setting in the main body apparatus 10 to the defined value setting determined in advance (setting changing step).

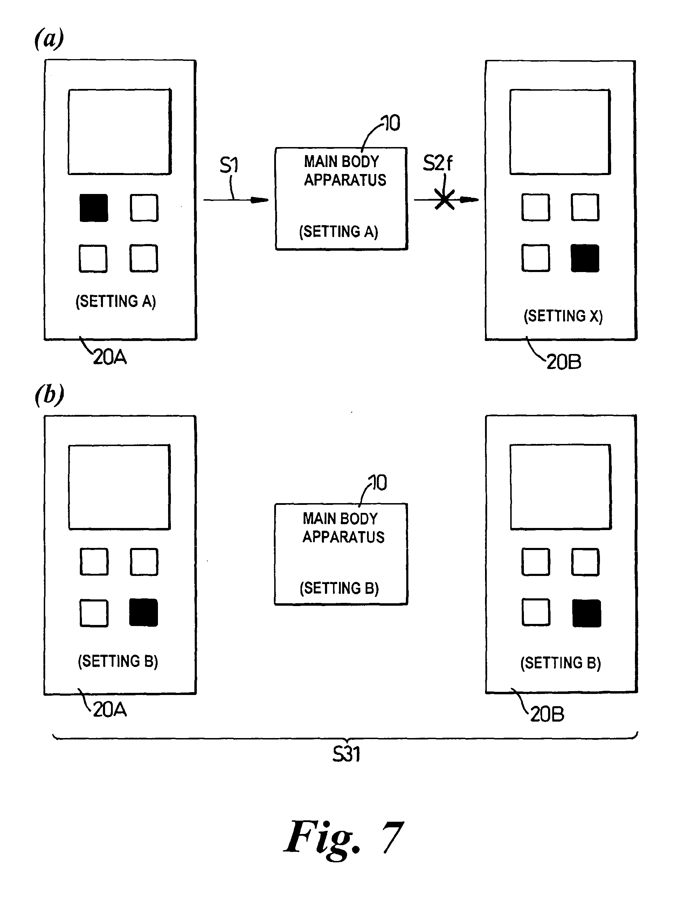

Here, examples of an operation with the above-mentioned structure will be explained with reference to Figs. 7A and 7B.

First, the remote controller 20A transmits a setting A to the main body apparatus 10, and the main body apparatus 10 stores the setting A (S1). At this point, since the main body apparatus 10 attempts to transmit the setting A to the remote controller 20B but fails in the transmission, an inconsistency occurs (S2f). Thus, a setting in the remote controller 20B is not changed to the setting A.

Next, when a fixed time has elapsed in a state in which the main body apparatus 10 and the remote controller 20B cannot communicate, all settings in the main body apparatus 10 and the remote controllers 20A and 20B are changed to a setting B (S31). Thus, the inconsistency of the setting in the main body apparatus 10 and the setting in the remote controller 20B can be eliminated.

Note that, when the fixed time has elapsed in a state in which the main body apparatus 10 and the remote controller 20B cannot communicate, the settings in the remote controller 20A and the main body apparatus 10 may be kept to be the setting A, (a) an indication that a setting is invalid in the remote controller 20B may be displayed or (b) at a point when the main body apparatus 10 and the remote controller 20B become capable of communicating with each other, the remote controller 20B automatically may read and store the setting in the main body apparatus 10.

### (1-4) When a remote controller and a remote controller become capable of communicating with each other, contents of a remote controller set last is notified to the other remote controller

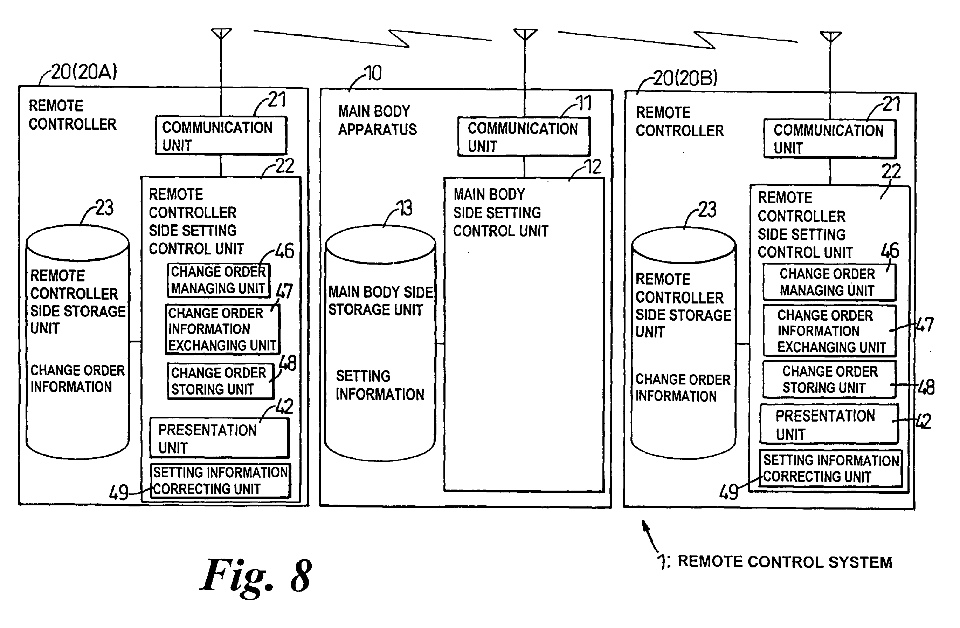

In this case, as shown in Fig. 8, the remote controllers 20 specifically have a structure described below.

The remote controllers 20 include at least the change order managing unit (change order managing means) 46, the change order information exchanging unit (change order information exchanging means) 47, the change order comparing unit (change order comparing means) 48, and the presentation unit (presentation means) 42.

The change order managing unit 46 stores change order information, which is capable of specifying a sequencing relation between a change made by the remote controller 20A and a change made by the other remote controller 20B, in the remote controller side storage unit 23.

The change order information exchanging unit 47 exchanges change order information with the other remote controller 20B.

The change order comparing unit 48 specifies a sequencing relation between the change made by the remote controller 20A and the change made by the other remote controller 20B.

In the case in which the change made by the other remote controller 20B is later than the change made by the remote controller 20A, the presentation unit 42 presents an indication that the setting in the main body apparatus 10 has been changed by the other remote controller 20B to a user using a display panel, an LED, or the like.

The remote controller side storage unit 23 stores setting information indicating a setting state of the main body apparatus 10. However, although setting information in the main body side storage unit 13 is always consistent with a setting state of the main body apparatus 10, setting information in the remote controller side storage unit 23 may differ from an actual setting state of the main body apparatus 10 according to circumstances.

The change order information may be any information as long as a temporal order between changes can be specified. The change order information may be times of day of requests for a change. It is also possible that, when the main body apparatus 10 changes a setting, the main body apparatus 10 transmits information on an order of change, and the remote controllers 20 having received the information store the information as change order information.

Consequently, even in the case in which a difference occurs in settings in the remote controllers 20A and 20B, it is possible to notify contents of the remote controller 20A set lastly to the other remote controller 20B when communication between the remote controllers 20A and 20B has become possible.

In addition, the remote controllers 20 may include the setting information correcting unit (setting information correcting means) 49 in the remote controller side setting control unit 22 instead of the presentation unit 42.

In the case in which a change made by the other remote controller 20B is later than a change made by the remote controller 20A, the setting information correcting unit 49 updates setting information and change order information in the remote controller side storage unit 23 according to setting information and change order information in the remote controller 20B.

At this point, the change order managing unit 46 stores change order information, which is capable of specifying a sequencing relation between a change made by the remote controller 20A and a change made by the other remote controller 20B, in the remote controller side storage unit 23 together with setting information indicating a setting state of the main body apparatus 10 according to the change made by the remote controller 20A.

Consequently, even in the case in which a difference has occurred in settings in the remote controllers 20A and 20B, it is possible to store contents of the remote controller 20A set lastly in the other remote controller 20B when communication between the remote controllers 20A and 20B has become possible.

With the above-mentioned structure, in the remote control system 1, each of the remote controllers 20 stores change order information, which is capable of specifying a sequencing relation between a change made by the remote controller 20 and changes made by the other remote controllers 20 (change order managing step), each of the remote controllers 20 exchanges change order information with the other remote controllers 20 (change order information exchanging step), and each of the remote controllers 20 specifies a sequencing relation between the change made by the remote controller 20 and the changes made by the other remote controllers 20 on the basis of the change order information (change order comparing step).

Thereafter, in the case in which the changes made by the other remote controllers 20 are later than the change made by the remote controller 20, an indication that a setting in the main body apparatus 10 has been changed by the other remote controllers 20 is presented to a user or setting information and change order information in the remote controller side storage unit 23 are updated according to setting information and change order information in the other remote controller 20.

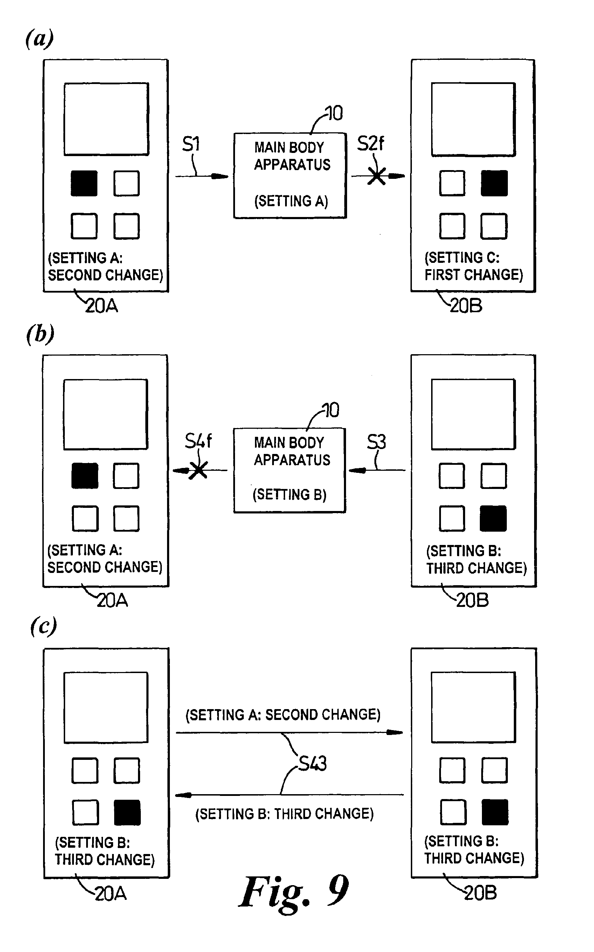

Here, examples of an operation with the above-mentioned structure will be explained with reference to Figs. 9A to 9C.

First, the remote controller 20A transmits a setting A to the main body apparatus 10 as a second change (S1). However, since the remote controller 20A fails to transmit the setting A to the remote controller 20B, an inconsistency occurs (S2f). Note that it is assumed that the remote controller 20B transmitted a setting C as a first change.

Next, the remote controller 20B transmits a setting B to the main body apparatus 10 as a third change (S3). However, since the remote controller 20B fails to transmit the setting B to the remote controller 20A, inconsistency occurs (S4f).

Next, when communication between the remote controller 20A and the remote controller 20B has become possible, the setting B of the remote controller 20B set lastly is notified to the remote controller 20A (S43).

Note that, Fig. 9C shows a case in which setting information is exchanged between the remote controllers 20A and 20B together with setting order information. In this way, the setting information may be exchanged between the remote controllers 20A and 20B simultaneously with exchange of the change order information.

Note that the remote controller 20 having acquired the last setting (a) may change a setting to the acquired setting, (b) may transmit a request for a setting change to the main body apparatus 10, or (c) may present the acquired setting to a user as a setting in the main body apparatus 10 to cause the user to select a measure to cope with the setting.

In general, in the case in which the plural remote controllers 20 are present but there is no distinction such as limitation on functions among the remote controllers 20, that is, in the case in which the main body apparatus 10 treats the plural remote controllers 20 without distinction, the main body apparatus 10 adopts a last setting change that is operated from a remote controller. In this system, it is necessary to synchronize settings stored by the remote controllers 20 as results of changes made by the remote controllers 20 and a setting in the main body apparatus 10.

In this regard, the remote control system 1 can correct a difference between the settings as described above to synchronize the settings in the remote controllers 20 and the main body apparatus 10. Note that it is likely that the settings in the remote controllers 20 and the main body apparatus 10 cannot be synchronized simply by presenting a difference between the settings to a user. However, an amount of communication can be controlled as long as there is no problem in terms of operation and application.

### [2] Make different settings in plural remote controllers

Next, a method of performing a setting change such that an inconsistency does not occur between the main body apparatus 10 and the plural remote controllers 20 by setting a rule in a setting change from the remote controllers 20 in the main body apparatus 10 will be explained. In (2-1) to (2-4) described below, since the main body apparatus 10 performs control for a setting change, the remote controllers 20 only have to include a change acceptance receiving unit 51 that receives an indication on whether a request for a change has been accepted.

### (2-1) Give priorities of settings to remote controllers

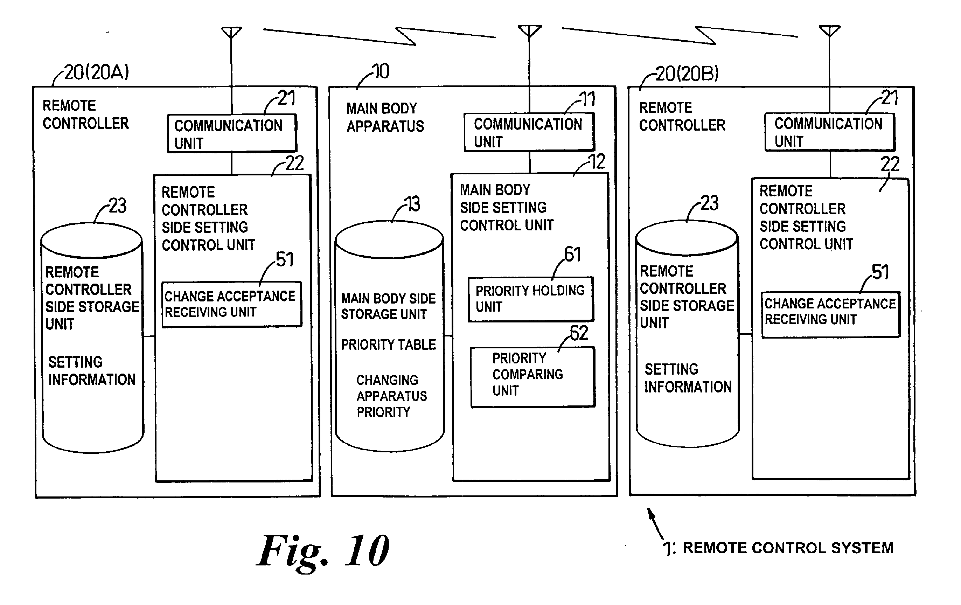

In this case, as shown in Fig. 10, the main body apparatus 10 specifically has the following structure.

The main body apparatus 10 includes at least the priority holding unit (priority holding means) 61 and the priority comparing unit (priority comparing means) 62 in the main body side setting control unit 12.

The priority holding unit 61 stores a priority (changing apparatus priority), which is given to the remote controller 20 that has changes a setting to a present setting, in the main body side storage unit 13.

When the priority comparing unit 62 receives a request for a setting change fromthe remote controller 20, the priority comparing unit 62 compares a priority given to the remote controller 20 and the priority stored in the main body side storage unit 13 and permits the setting change only when the priority given to the remote controller 20 is higher.

Priorities are set for the respective remote controllers 20 in advance. Information on the priorities may be stored as a priority table in the main body side storage unit 13 of the main body apparatus 10 in association with the respective remote controllers 20 or may be received from the remote controllers 20 together with setting requests.

With the above-mentioned structure, the remote control system 1 stores a priority given to the remote controller 20 that has changed a setting to a present setting (priority holding step) and, when the main body apparatus 10 receives a request for a setting change from the remote controller 20, compares a priority given to the remote controller 20 and the stored priority and permits the setting change only when the priority given to the remote controller 20 is higher (priority comparing step).

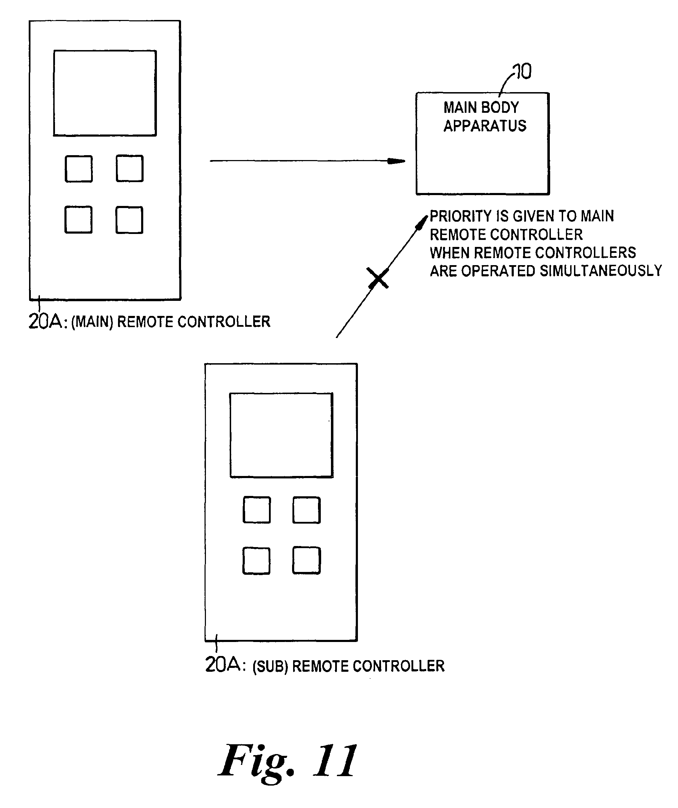

Here, examples of an operation with the above-mentioned structure will be explained with reference to Fig. 11.

In the case in which there are two remote controllers, namely, a main remote controller 20A and a sub-remote controller 20B, when the remote controllers are operated simultaneously, a setting instruction from the main remote controller 20A is adopted. Even in the case in which temporal deviation occurs, a setting changed by the main remote controller 20A cannot be changed by the sub-remote controller 20B. A setting changed by the sub-remote controller 20B can be changed again by the main remote controller 20A. Note that, in the case in which a priority of the sub-remote controller 20B is low in a comparison by the main body apparatus 10, the sub-remote controller 20B receives notification to the effect that a request for a change has not been accepted.

### (2-2) Set a functional limit for a setting

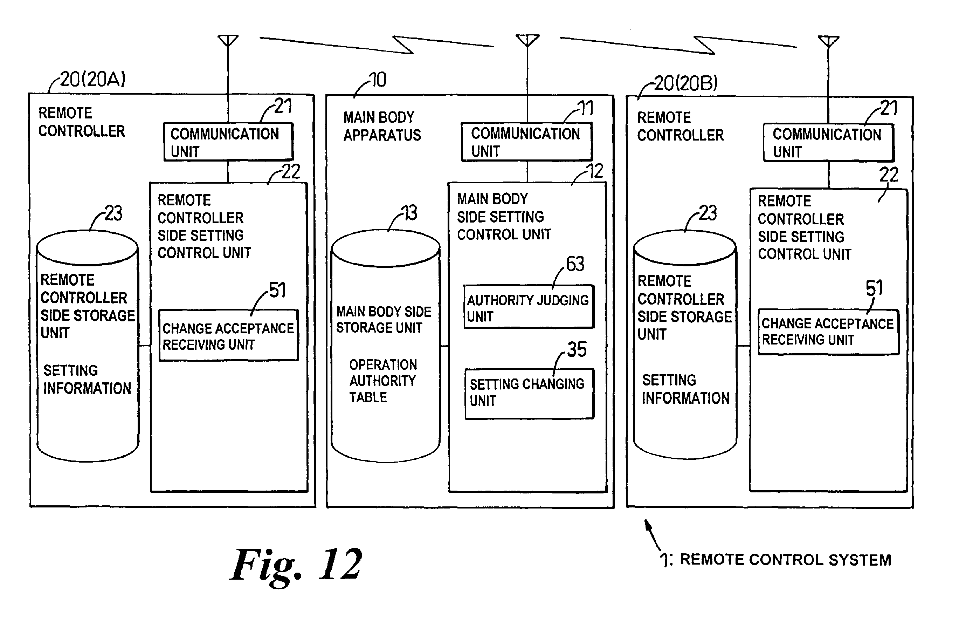

In this case, as shown in Fig. 12, the main body apparatus 10 specifically includes a structure described below.

The main body apparatus 10 includes at least the authority judging unit (authority judging means) 63 and the setting changing unit (setting changing means) 35 in the main body side setting control unit 12.

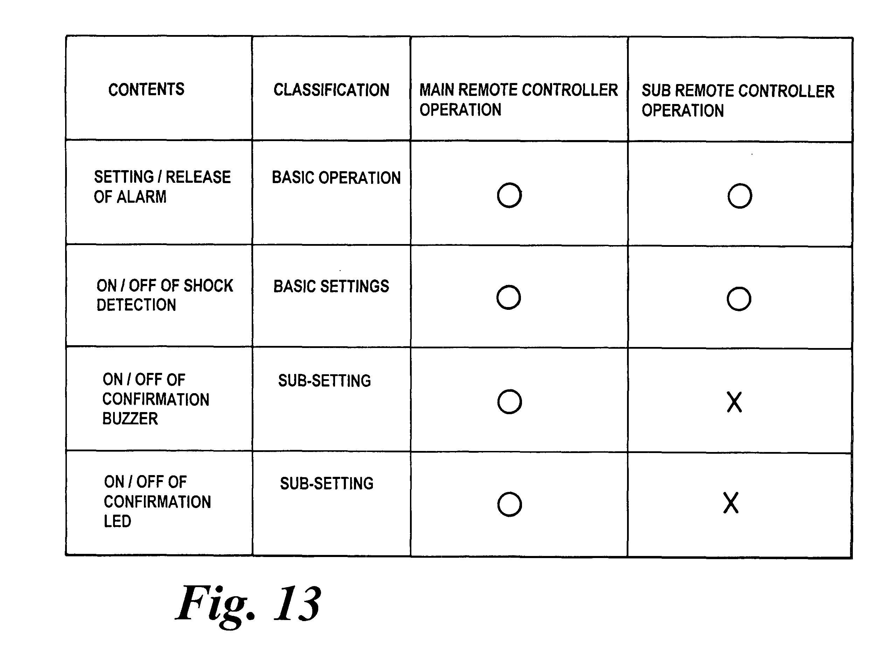

When the authority judging unit 63 receives a request for a setting change from the remote controller 20, the authority judging unit 63 permits the change when the remote controller 20 has an authority for the change. More specifically, the authority judging unit 63 controls a changeable function for each remote controller in accordance with an operation authority table shown in Fig. 13.

In the case in which the change is permitted by the authority judging unit 63, the setting changing unit 35 changes the setting.

In each of the remote controllers 20, a range of a setting changeable from the remote controller 20 is set as an authority in advance. This information is stored in the main body side storage unit 13 of the main body apparatus 10 as an operation authority table.

With the above-mentioned structure, the remote control system 1 sets, in each of the remote controllers 20, a range of a setting changeable from the remote controller 20 (authority setting step), when the main body apparatus 10 receives a request for a setting change from the remote controller 20, permits the change when the remote controller 20 has an authority for the change (authority judging step), and changes the setting (setting changing step).

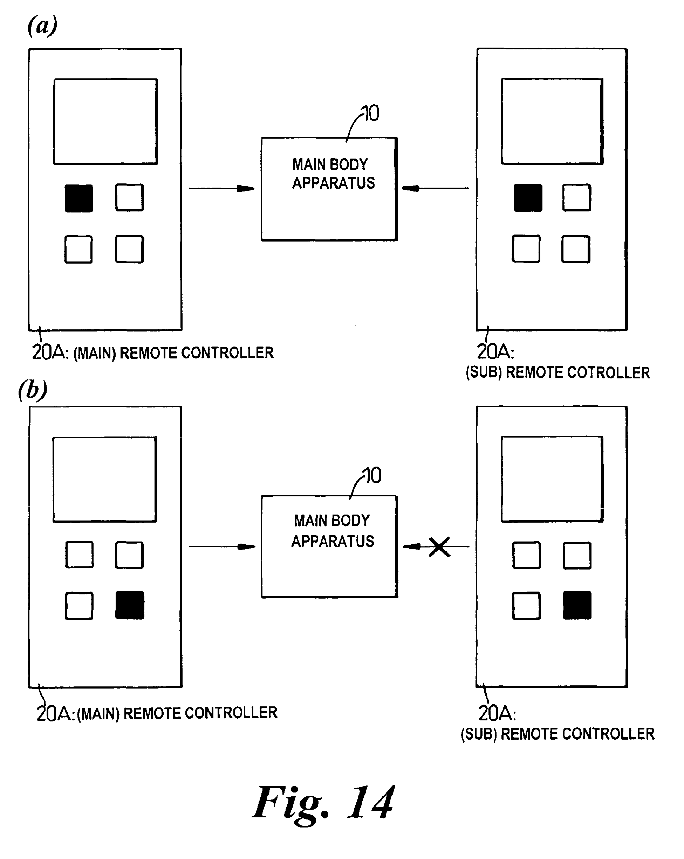

Here, examples of an operation with the structure will be explained with reference to Figs. 14A and 14B.

For example, in the case in which two remote controllers, namely, the main remote controller 20A and the sub-remote controller 20B, are registered, the main remote controller 20A can change all settings with respect to the main body apparatus 10 but the sub-remote controllers 20B can only perform a setting change for a basic function (Figs. 14A and 14B). In the case in which there are three or more remote controllers, it is possible that one remote controller has a main function and the other remote controllers have a sub-function, or ranges of a setting may be provided for the respective remote controllers.

The same function can be realized by locking a part or all of settings in the main remote controller 20A. In this case, a setting operation from the sub-remote controller 20B is not accepted from the time when the lock is set in the main remote controller 20A until the time when the lock is released (Fig. 14B). During this period, it is possible to make an arrangement such that all setting operations can be made from the main remote controller 20A or a setting for releasing the lock can be made from the main remote controller 20A.

In the case in which it is judged in the main body apparatus 10 that the sub-remote controller 20B does not satisfy an authority, the sub-remote controller 20B receives notification to the effect that a request for a change has not been accepted. Note that, in the remote controllers 20, it is also possible to make a setting such that a user can operate only a function corresponding to an authority.

### (2-3) Give priority to a remote controller closer to a main body apparatus

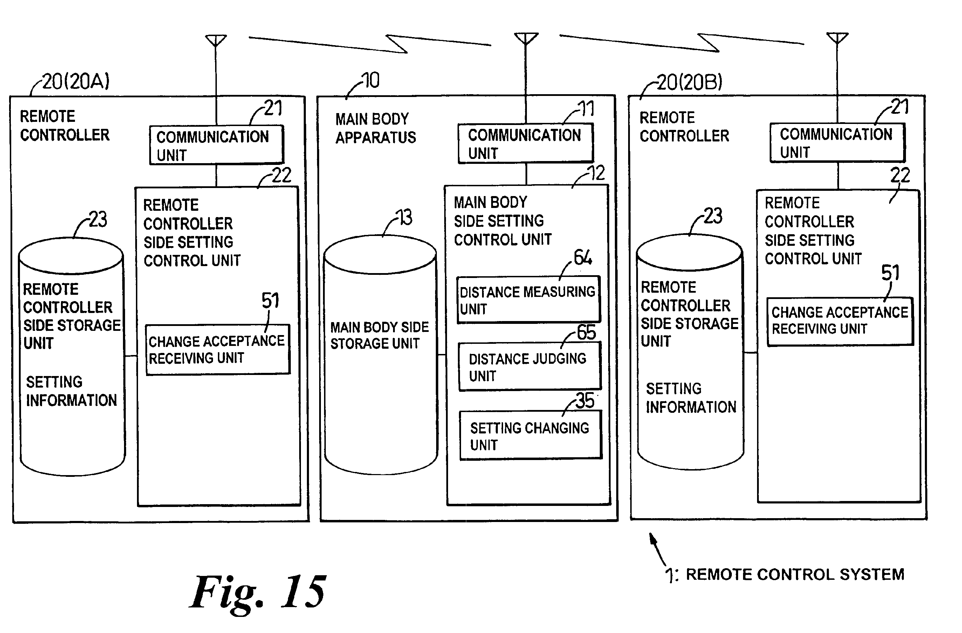

In this case, as shown in Fig. 15, the main body apparatus 10 specifically has a structure described below.

The main body apparatus 10 includes at least the distance measuring unit (distance measuring means) 64, the distance judging unit (distance judging means) 65, and the setting changing unit (setting changing means) 35 in the main body side setting control unit 12.

The distance measuring unit 64 measures a distance between a remote controller 20, which has transmitted a request for a setting change, and the main body apparatus 10.

When the distance judging unit 65 receives requests for a setting change from the plural remote controllers 20, the distance judging unit 65 specifies the remote controller 20 closest to the main body apparatus 10.

The setting changing unit 35 changes a setting in accordance with a request for a setting change from the closest remote controller 20 specified by the distance judging unit 65.

With the above-mentioned structure, the remote control system 1 measures a distance between the remote controller 20, which has transmitted a request for a setting change, and the main body apparatus 10 (distance measuring step), when requests for a setting change are received from the plural remote controllers 20, specifies the remote controller 20 closest to the main body apparatus 10 (distance judging step), and changes a setting in accordance with a request for a setting change from the specified closest remote controller 20 (setting changing step).

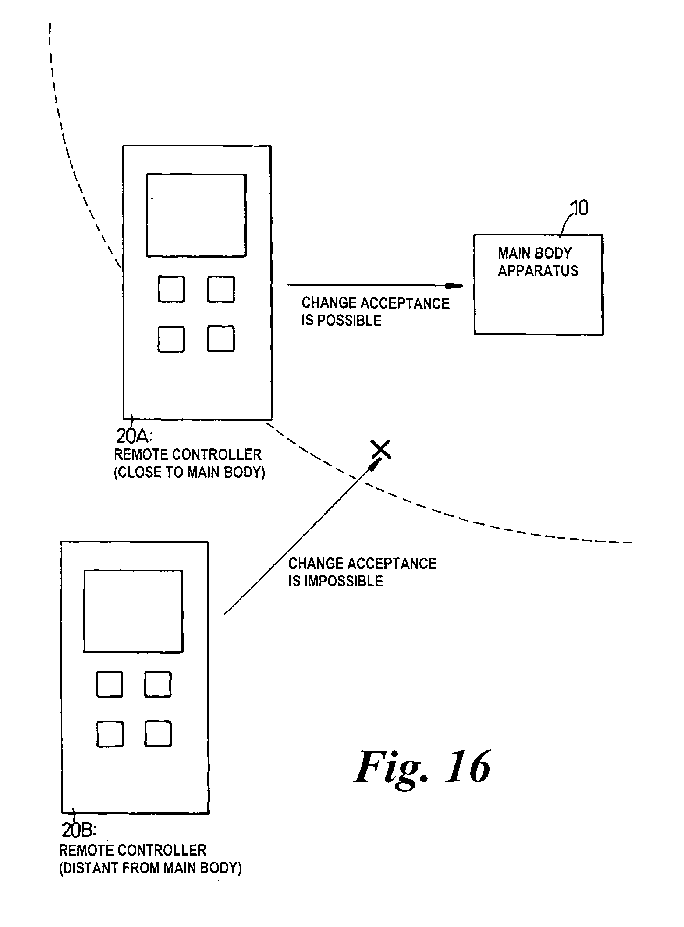

Here, examples of an operation with the above-mentioned structure will be explained with reference to Fig. 16.

In the case in which there are the two remote controllers 20A and 20B within a distance for communication with the main body apparatus 10, an operation for the remote controller 20A closer to the main body apparatus 10 is given priority. In this system, if a remote controller is in a car or near the car, an operation of the remote controller is given priority, and an operation cannot be performed from other distant remote controllers. Therefore, only a user, who has a remote controller, in a car or getting on or off the car can operate the remote controller, and an unexpected change for a setting from a distant location is not accepted.

Note that a distance between the main body apparatus 10 and the remote controller 20 can usually be measured according to an intensity of a radio wave from a target remote controller. The distance may be measured according to a time lag of transmission and reception of a radio wave or a round-trip time of communication by completely synchronizing internal clocks of the main body apparatus 10 and the remote controllers 20 or may be judged using positional information according to a GPS (global positioning system). In addition, the distance may not be strict as long as the distance is measured by the same scale, and it does not matter if there is an error between the distance and an actual distance.

### (2-4) Setting cannot be made unless plural remote controllers make the same setting

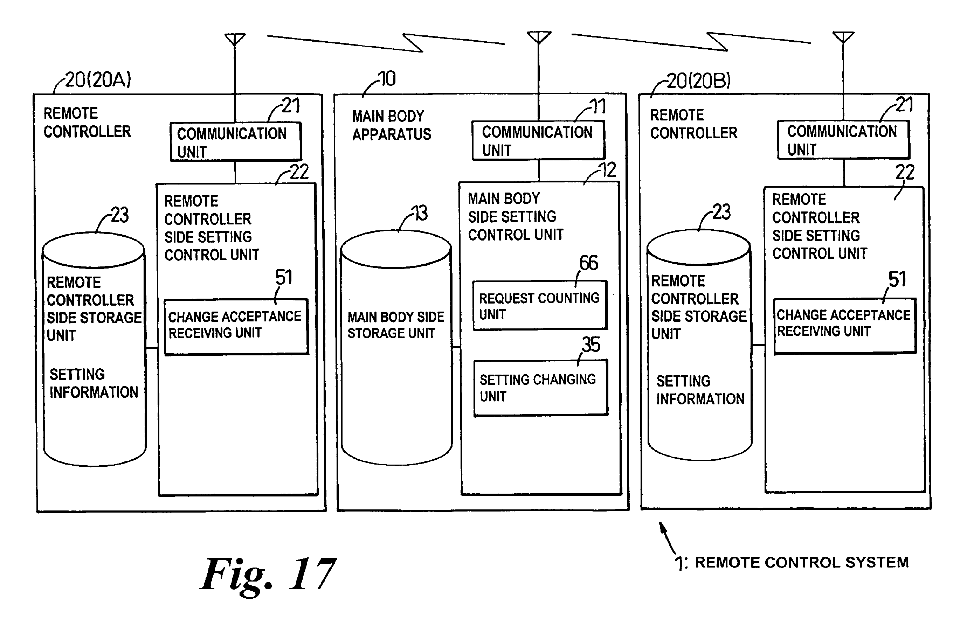

In this case, as shown in Fig. 17, the main body apparatus 10 specifically has a structure described below.

The main body apparatus 10 includes at least the request counting unit (request counting means) 66 and the setting changing unit (setting changing means) 35 in the main body side setting control unit 12.

The request counting unit 66 holds received requests for a setting change and permits the setting change when a predetermined number of requests for a setting change of identical contents are collected.

In the case in which the change is permitted by the request counting unit 66, the setting changing unit 35 changes the setting.

With the above-mentioned structure, the remote control system 1 holds requests for a setting change received from the remote controllers 20 in the main body apparatus 10 and, when predetermined number of requests for a setting change of identical contents are collected, permits the setting change (request counting step) and changes a setting (setting changing step).

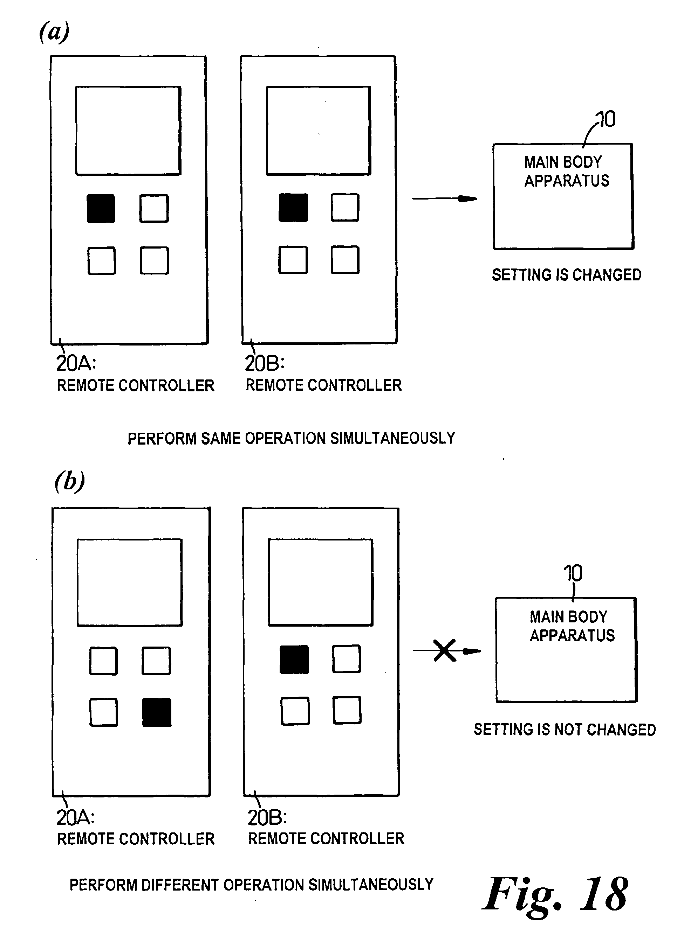

Here, examples of an operation with the above-mentioned structure will be explained with reference to Figs. 18A and 18B.

In the remote control system 1, a setting cannot be changed unless plural remote controllers perform the same setting operation at the same timing (Figs. 18A and 18B). In other words, in the case in which the two remote controllers 20A and 20B are registered in the main body apparatus 10, a setting cannot be changed by only one remote controller.

Note that, as a setting suitable for such control, there is an important setting change that is to be confirmed by all the remote controllers 20 when the setting change is made. In other words, all the settings in the main body apparatus 10 may not be subjected to the control.

In addition, it is unnecessary that a setting change is performed at completely the same timing by the plural remote controllers. It is possible that one remote controller 20 performs an operation and then another remote controller 20 performs an operation within a fixed time after the operation by the remote controller 20. Finally, a setting is changed at a point when it can be confirmed that the identical operation has been performed in all the remote controllers 20 registered in the main body apparatus 10. In the case of an answerback remote controller, a setting change can be notified to all remote controllers.

Here, as a supplement, it will be explained that the remote control system in accordance with the invention is preferable in a case in which plural multi-function remote controllers, which are capable of making detailed settings, are included in the remote control system.

For example, in a vehicle security system, in the case in which there are plural users who use vehicles mounted with a main body apparatus (on-vehicle apparatus), it is desirable that remote controllers with the same function can be used as many as the number of users. In such a system, settings can be synchronized when the main body apparatuses and the remote controllers perform two-way communication. However, since a range, in which communication is possible, is limited in the case in which radio such as specified low power radio is used for communication, synchronization of settings cannot be guaranteed between the main body apparatuses and all remote controllers registered in the system.

As a specific example, a case in which an operation for changing a setting is performed by the two remote controllers A and B with respect to one main body apparatus will be examined. It is assumed that three setting changes ((1) ON/OFF of a car buzzer at the time when abnormality has occurred, (2) ON/OFF of an alarm setting, and (3) ON/OFF of remote controller/vibrator notification at the time when abnormality has occurred) are possible from the remote controllers A and B, respectively, and a present setting in the main body apparatus is displayed on the remote controllers A and B.

First, the alarm setting in the main body apparatus is turned ON from the remote controller A. At this point, if the remote controller B is within a range in which communication with the main body apparatus is possible, it is notified to the remote controller B that the alarm setting has been turned ON. However, if the remote controller B is not within the range in which communication with the main body apparatus is possible, it is not notified to the remote controller B that the alarm setting has been changed. Therefore, when the alarm setting in the main body apparatus is ON, whereas it is indicted in the remote controller A that the alarm setting is ON, it is indicated in the remote controller B that the alarm setting is OFF. This is a phenomenon in which, in a system using plural remote controllers, setting operations of the remote controllers and a main body apparatus cannot be synchronized.

As a solution for this problem, there is a method in which a main body apparatus and remote controllers perform synchronization processing at all times. This method is disadvantageous in terms of power consumption because the remote controllers are always in a reception state and the main body apparatus is required to perform transmission until settings are synchronized after processing for changing the settings. Therefore, unless a battery has enough power, it is extremely difficult to adopt the method of continuous synchronization in, in particular, a remote controller carried by a user.

In the above-mentioned example, there are classifications in settings in the main body apparatus according to significance and functions such as "a setting for which an operation is not changed usually" ((1) in the above description), "a setting that is always synchronized desirably" ((2) in the above description), and "a setting that does not have to be synchronized" ((3) in the above description). Thus, it is necessary to perform synchronization processing taking into account these classifications in order to synchronize settings in the main body apparatus and the remote controllers.

Thus, in the invention, various rule settings are proposed with respect to a setting change which is likely to include an inconsistency. Note that, in the case in which there is no rule in synchronization processing, a user does not even known whether settings in a remote controller and a main body apparatus are synchronized. In other words, the user is unable to even grasp that there is a possibility of a setting change and confused.

In the invention, a rule is set for a setting change such that inconsistent setting operations are not performed. Thus, if a user grasps that settings are not synchronized, the user can perform an operation corresponding to the settings. For example, in the above-mentioned example, operations described below are possible. (1) Concerning a setting, for which an operation change is not performed usually, such as ON/OFF of a car buzzer at the time of occurrence of abnormality, a person requiring a setting change performs the setting change without confirming the setting. (2) Concerning a setting, which is always synchronized desirably, such as ON/OFF of an alarm setting, the setting is confirmed before a change, and operations by other users are confirmed. (3) Concerning a setting, which is not required to be synchronized, such as ON/OFF of remote controller/vibrator notification at the time of occurrence of abnormality, since the setting is not synchronized with a main body apparatus, it is unnecessary to consider the setting at all.

Note that this embodiment is not meant to limit a scope of the invention, and various alterations are possible within the scope of the invention. For example, the invention can be constituted as described below.

The main body side setting control unit 12 of the main body apparatus 10 and the remote controller side setting control unit 22 of the remote controller 20 can be realized by, for example, a CPU (Central Processing Unit) executing programs for realizing processing operations in respective functional blocks in the inside of the main body apparatus 10 and the remote controller 20. In addition, these programs are stored in, for example, storages (which may be the main body side storage unit 13 and the remote controller side storage unit 23) and are read out to a work area storage unit such as a RAM and executed by the CPU when the programs are required to be executed. The storages storing the programs can be constituted by a nonvolatile IC memory such as a flash EEPROM or a nonvolatile recording medium such as a hard disk. In addition, it is also possible that the programs are stored in various removable media, and the programs are executed by being read out from the removable media when the programs are required to be executed. In addition, the programs may be downloaded from the outside via a communication network and executed. Moreover, the main body side setting control unit 12 and the remote controller side setting control unit 22 may be constituted by ICs realizing the respective functional blocks.

As described above, the main body apparatus for a remote control system in accordance with the invention includes: a changing apparatus holding unit that stores apparatus identification information, which is capable of specifying a remote control apparatus that has changed a setting to a present setting, in a storage unit; a communication possibility judging unit that judges whether communication with the other remote control apparatuses excluding the remote control apparatus, which has changed the setting to the present setting, is possible; and a setting notifying unit that, when communication with the other remote control apparatuses has become possible, transmits setting information indicating a setting state of the main body apparatus itself to the remote control apparatuses.

Consequently, contents of a setting in the main body apparatus is notified to the remote control apparatuses when the main body apparatus and the remote control apparatuses have become capable of communicating with each other. Thus, it is possible to synchronize settings in the remote control apparatuses with the setting in the main body apparatus.

Therefore, there is an advantage that, in the remote control system in which the plural remote control apparatuses are capable of making a setting change independently with respect to the main body apparatus and the main body apparatus and the remote control apparatuses may not be capable of communicating with each other, a difference in settings in the main body apparatus and the respective remote control apparatuses can be eliminated.

The remote control apparatus for a remote control system in accordance with the invention is characterized by including: a setting acquiring unit that receives setting information indicating a setting state of a main body apparatus from the main body apparatus; and a presentation unit that presents the setting information to a user.

Consequently, when the main body apparatus and the remote control apparatuses have become capable of communicating with each other, the remote control apparatuses acquire contents of a setting in the main body apparatus and present the contents of a setting to a user. Thus, even in the case in which a setting in the main body apparatus and settings in the remote control apparatuses differ from each other, it is possible to cause the user to select a measure for coping with the difference.

Therefore, there is an advantage that, in the remote control system in which the plural remote control apparatuses are capable of making a setting change independently with respect to the main body apparatus and the main body apparatus and the remote control apparatuses may not be capable of communicating with each other, a difference in settings in the main body apparatus and the respective remote control apparatuses can be eliminated.

The remote control apparatus for a remote control system in accordance with the invention is characterized by including: a setting acquiring unit that receives setting information indicating a setting state of a main body apparatus from the main body apparatus; and a setting managing unit that stores the setting information in a storage unit.

Consequently, when the main body apparatus and the remote control apparatuses have become capable of communicating with each other, the remote control apparatuses acquire contents of a setting in the main body apparatus and change settings in the remote control apparatuses to a setting in the main body apparatus. Thus, even in the case in which a setting in the main body apparatus and settings in the remote control apparatuses differ from each other, it is possible to automatically synchronize the settings in the remote control apparatuses to the setting in the main body apparatus.

Therefore, there is an advantage that, in the remote control system in which the plural remote control apparatuses are capable of making a setting change independently with respect to the main body apparatus and the main body apparatus and the remote control apparatuses may not be capable of communicating with each other, a difference in settings in the main body apparatus and the respective remote control apparatuses can be eliminated.

The control method for a remote control system in accordance with the invention is characterized by including: a changing apparatus holding step of storing apparatus identification information capable of specifying a remote control apparatus that has changed a setting to a present setting; a communication possibility judging step of judging whether communication between the main body apparatus and the other remote control apparatuses excluding the remote control apparatus, which has changed the setting to the present setting, is possible; and a setting notifying step of, when communication with the other remote control apparatuses has become possible, transmitting setting information indicating a setting state of the main body apparatus to the remote control apparatuses.

Consequently, when the main body apparatus and the remote control apparatuses have become capable of communicating with each other, contents of a setting in the main body apparatus is notified to the remote control apparatuses. This makes it possible to synchronize settings in the remote control apparatuses to a setting in the main body apparatus.

Therefore, there is an advantage that, in the remote control system in which the plural remote control apparatuses are capable of making a setting change independently with respect to the main body apparatus and the main body apparatus and the remote control apparatuses may not be capable of communicating with each other, a difference in settings in the main body apparatus and the respective remote control apparatuses can be eliminated.

The main body apparatus for a remote control system in accordance with the invention is characterized by including: a setting notification request acquiring unit that receives a notification request for setting information indicating a setting state of the main body apparatus itself from a remote control apparatus; and a setting notifying unit that, when the notification request for setting information is received by the setting notification. request acquiring unit from a remote control apparatus, transmits the setting information to the remote control apparatus.

Consequently, contents of a setting in the main body apparatus is notified to the remote control apparatus according to an operation by a user of the remote control apparatus. This makes it possible to synchronize a setting in the remote control apparatus to the setting in the main body apparatus.

Therefore, there is an advantage that, in the remote control system in which the plural remote control apparatuses are capable of making a setting change independently with respect to the main body apparatus and the main body apparatus and the remote control apparatuses may not be capable of communicating with each other, a difference in settings in the main body apparatus and the respective remote control apparatuses can be eliminated.

The remote control apparatus for a remote control system in accordance with the invention is characterized by including: a setting notification requesting unit that transmits a notification request for setting information indicating a setting state of the main body apparatus to the main body apparatus; and a setting acquiring unit that receives the setting information from the main body apparatus.

Consequently, the remote control apparatus acquires contents of a setting in the main body apparatus according to an operation by a user of the remote control apparatus. This makes it possible to synchronize a setting in the remote control apparatus to the setting in the main body apparatus.

Therefore, there is an advantage that, in the remote control system in which the plural remote control apparatuses are capable of making a setting change independently with respect to the main body apparatus and the main body apparatus and the remote control apparatuses may not be capable of communicating with each other, a difference in settings in the main body apparatus and the respective remote control apparatuses can be eliminated.

The remote control apparatus for a remote control system in accordance with the invention is characterized by further including a presentation unit that presents the setting information received from the main body apparatus to a user.

Consequently, the remote control unit presents acquired contents of a setting in the main body apparatus to a user. Thus, in the case in which a setting in the main body apparatus and settings in the remote control apparatuses differ from each other, it is possible to cause the user to select a measure for coping with the difference.

The remote control apparatus for a remote control system in accordance with the invention is characterized by further including a setting managing unit that stores the setting information received from the main body apparatus in a storage unit.

Consequently, the remote control apparatus stores acquired contents of a setting in the main body apparatus in the storage unit. Thus, it is possible to automatically eliminate a difference between a setting in the main body apparatus and a setting in the remote control apparatus.

The control method for a remote control system in accordance with the invention is characterized by including: a setting notification requesting step of transmitting a notification request for setting information indicating a setting state of the main body apparatus from a remote control apparatus to the main body apparatus; and a setting notifying step of transmitting the setting information from the main body apparatus to the remote control apparatus.

Consequently, the remote control apparatus acquires contents of a setting in the main body apparatus according to an operation by a user of the remote control apparatus. This makes it possible to synchronize a setting in the remote control apparatus to a setting in the main body apparatus.

Therefore, there is an advantage that, in the remote control system in which the plural remote control apparatuses are capable of making a setting change independently with respect to the main body apparatus and the main body apparatus and the remote control apparatuses may not be capable of communicating with each other, a difference in settings in the main body apparatus and the respective remote control apparatuses can be eliminated.

The main body apparatus for a remote control system in accordance with the invention is characterized by including: a communication possibility judging unit that judges whether communication with the remote control apparatuses is possible; and a setting changing unit that, when a state in which communication with any one of the remote control apparatuses is impossible continues for a predetermined time, changes the setting in the main body apparatus itself to a defined value setting determined in advance.

Consequently, when a state in which communication between the main body apparatus and the remote control apparatus is impossible continues for a fixed time, a setting in the main body apparatus is changed to the defined value setting. This makes it possible to synchronize a setting in the main body apparatus and a setting in the remote control apparatus by also changing a setting to the defined value setting in the remote control apparatus simultaneously.

Therefore, there is an advantage that, in the remote control system in which the plural remote control apparatuses are capable of making a setting change independently with respect to the main body apparatus and the main body apparatus and the remote control apparatuses may not be capable of communicating with each other, a difference in settings in the main body apparatus and the respective remote control apparatuses can be eliminated.

The remote control apparatus for a remote control system in accordance with the invention is characterized by including: a communication possibility judging unit that judges whether communication with the main body apparatus is possible; and a presentation unit that, when a state in which it is impossible to communicate with the main body apparatus continues for a predetermined time, presents an indication that the setting in the main body apparatus has been changed to a defined value setting determined in advance to a user.

Consequently, when a state in which communication between the main body apparatus and the remote control apparatus is impossible continues for a fixed time, an indication that the setting in the main body apparatus has been changed to the defined value setting is presented to a user. Thus, even in a state in which communication between the main body apparatus and the remote control apparatus is impossible, it is possible to cause the user to select a measure for coping with the state.

Therefore, there is an advantage that, in the remote control system in which the plural remote control apparatuses are capable of making a setting change independently with respect to the main body apparatus and the main body apparatus and the remote control apparatuses may not be capable of communicating with each other, a difference in settings in the main body apparatus and the respective remote control apparatuses can be eliminated.

The remote control apparatus for a remote control system in accordance with the invention is characterized by including: a communication possibility judging unit that judges whether communication with the main body apparatus is possible; and a setting managing unit that, when a state in which it is impossible to communicate with the main body apparatus continues for a predetermined time, stores a defined value setting determined in advance in a storage unit as setting information indicating a setting state of the main body apparatus.

Consequently, when a state in which communication between the main body apparatus and the remote control apparatus is impossible continues for a fixed time, a setting in the remote control apparatus is changed to the defined valuesetting. This makes it possible to synchronize a setting in the main body apparatus and a setting in the remote control apparatus by also changing a setting to the defined value setting in the remote control apparatus simultaneously.

Therefore, there is an advantage that, in the remote control system in which the plural remote control apparatuses are capable of making a setting change independently with respect to the main body apparatus and the main body apparatus and the remote control apparatuses may not be capable of communicating with each other, a difference in settings in the main body apparatus and the respective remote control apparatuses can be eliminated.

The control method for a remote control system in accordance with the invention is characterized by including: a communication possibility judging step of judging whether communication between the main body apparatus and the remote control apparatuses is possible; and a setting changing step of, when a state in which communication between the main body apparatus and any one of the remote control apparatuses is impossible continues for a predetermined time, changing the setting in the main body apparatus to a defined value setting determined in advance.

Consequently, when a state in which communication between the main body apparatus and the remote control apparatus is impossible continues for a fixed time, a setting in the remote control apparatus is changed to the defined value setting. This makes it possible to synchronize a setting in the main body apparatus and a setting in the remote control apparatus by also changing a setting to the defined value setting in the remote control apparatus simultaneously.

Therefore, there is an advantage that, in the remote control system in which the plural remote control apparatuses are capable of making a setting change independently with respect to the main body apparatus and the main body apparatus and the remote control apparatuses may not be capable of communicating with each other, a difference in settings in the main body apparatus and the respective remote control apparatuses can be eliminated.

The remote control apparatus for a remote control system in accordance with the invention is characterized by including: a change order managing unit that stores change order information, which is capable of specifying a sequencing relation between a change made by the remote control apparatus itself and a change made by another remote control apparatus, in a storage unit; a change order information exchanging unit that exchanges the change order information with the another control apparatus; a change order comparing unit that specifies a sequencing relation between a change made by the remote control apparatus itself and a change made by the another remote control apparatus on the basis of the change order information; and a presentation unit that, when the change made by the another remote control apparatus is later than the change made by the remote control apparatus itself, presents an indication that the setting in the main body apparatus has been changed by the another remote control apparatus to a user.

Consequently, a last setting is specified among the remote control apparatuses and, if the setting is not made by the remote control apparatus itself, the remote control apparatus presents an indication to that effect to a user. This makes it possible to synchronize a setting in the remote control apparatus with a setting in the main body apparatus even in a state in which the remote control apparatus cannot communicate with the main body apparatus.

Therefore, there is an advantage that, in the remote control system in which the plural remote control apparatuses are capable of making a setting change independently with respect to the main body apparatus and the main body apparatus and the remote control apparatuses may not be capable of communicating with each other, a difference in settings in the main body apparatus and the respective remote control apparatuses can be eliminated.

The remote control apparatus for a remote control system in accordance with the invention is characterized by including: a change order managing unit that stores change order information, which is capable of specifying a sequencing relation between a change made by the remote control apparatus itself and a change made by another remote control apparatus, in a storage unit together with setting information indicating a setting state of the main body apparatus according to the change made by the remote control apparatus itself; a change order information exchanging unit that exchanges the change order information with the another remote control apparatus; a change order comparing unit that specifies a sequencing relation between a change made by the remote control apparatus itself and a change made by the another remote control apparatus on the basis of the change order information; and a setting information correcting unit that, when the change made by the another remote control apparatus is later than the change made by the remote control apparatus itself, updates the setting information and the change order information in the storage unit according to setting information and change order information in the remote control apparatus.

Consequently, a last setting is specified among the remote control apparatuses and, if the setting is not made by the remote control apparatus itself, the remote control apparatus records the setting in the remote control apparatus itself. This makes it possible to synchronize a setting in the remote control apparatus with a setting in the main body apparatus even in a state in which the remote control apparatus cannot communicate with the main body apparatus.

Therefore, there is an advantage that, in the remote control system in which the plural remote control apparatuses are capable of making a setting change independently with respect to the main body apparatus and the main body apparatus and the remote control apparatuses may not be capable of communicating with each other, a difference in settings in the main body apparatus and the respective remote control apparatuses can be eliminated.

The control method for a remote control system in accordance with the invention is characterized by including: a change order managing step of, in each of the remote control apparatuses, storing change order information, which is capable of specifying a sequencing relation between a change made by the remote control apparatus itself and a change made by another remote control apparatus; a change order information exchanging step of, in each of the remote control apparatuses, exchanging the change order information with the another remote control apparatus; and a change order comparing step of, in each of the remote control apparatuses, specifying a sequencing relation between a change made by the remote control apparatus itself and a change made by the another remote control apparatus on the basis of the change order information.

Consequently, a last setting is specified among the remote control apparatuses. This makes it possible to synchronize a setting in the remote control apparatus with a setting in the main body apparatus even in a state in which the remote control apparatus cannot communicate with the main body apparatus.

Therefore, there is an advantage that, in the remote control system in which the plural remote control apparatuses are capable of making a setting change independently with respect to the main body apparatus and the main body apparatus and the remote control apparatuses may not be capable of communicating with each other, a difference in settings in the main body apparatus and the respective remote control apparatuses can be eliminated.

The main body apparatus for a remote control system in accordance with the invention is characterized by including: a priority holding unit that stores a priority given to a remote control apparatus, which has changed a setting to a present setting, in a storage unit; and a priori ty comparing unit that, when a request for a setting change is received from a remote control apparatus, compares a priority given to the remote control apparatus and the priority stored in the storage unit and permits the setting change only when the priority given to the remote control apparatus is higher.

The control method for a remote control system in accordance with the invention is characterized by including: a priority holding step of storing a priority given to a remote control apparatus that has changed a setting to a present setting; and a priority comparing step of, when the main body apparatus receives a request for a setting change from a remote control apparatus, compares a priority given to the remote control apparatus and the priority stored in the storage unit and permits the setting change only when the priority given to the remote control apparatus is higher.

Consequently, the main body apparatus accepts only a request for a change from a remote control apparatus having a priority higher than the priority given to the remote control apparatus that has changed the setting to the present setting. Thus, a setting in the main body apparatus can be changed in accordance with a request for a change from a remote control apparatus having a highest priority.

Therefore, there is an advantage that, in the remote control system in which the plural remote control apparatuses are capable of making a setting change independently with respect to the main body apparatus and the main body apparatus and the remote control apparatuses may not be capable of communicating with each other, since a setting in the main body apparatus can be changed in accordance with a rule, a difference in settings in the main body apparatus and the respective remote control apparatuses can be prevented.

The main body apparatus for a remote control system in accordance with the invention, in which a range of setting changeable from the remote control apparatus is set in each of the remote control apparatuses in advance as an authority, is characterized by including: an authority judging unit that, when a request for a setting change is received from a remote control apparatus, permits the change when the remote control apparatus has an authority for the change; and a setting change unit that changes the setting when the change is permitted by the authority judging unit.

The control method for a remote control system in accordance with the invention is characterized by including: an authority setting step of setting, in each of the remote control apparatuses, a range of setting changeable from the remote control apparatus as an authority; an authority judging step of, when the main body apparatus receives a request for a setting change from a remote control apparatus, permitting the change when the remote control apparatus has an authority for the change; and a setting change step of changing the setting when the change is permitted in the authority judging step.

Consequently, the main body apparatus receives only a request for a change in accordance with an authority given to a remote control apparatus. Thus, a setting in the main body apparatus can be changed in accordance with the request for a change from the remote control apparatus having the authority.

Therefore, there is an advantage that, in the remote control system in which the plural remote control apparatuses are capable of making a setting change independently with respect to the main body apparatus and the main body apparatus and the remote control apparatuses may not be capable of communicating with each other, since a setting in the main body apparatus can be changed in accordance with a rule, a difference in settings in the main body apparatus and the respective remote control apparatuses can be prevented.

The main body apparatus for a remote control system in accordance with the invention is characterized by including: a distance measuring unit that measures a distance between a remote control apparatus, which has transmitted a request for a setting change, and the main body apparatus itself; a distance judging unit that, when requests for a setting change are received from the plural remote control apparatuses, specifies a remote control apparatus closest to the main body apparatus itself; and a setting changing unit that changes the setting in accordance with the request for a setting change from the closest remote control apparatus specified by the distance judging unit.

The control method for a remote control system in accordance with the invention is characterized by including: a distance measuring step of measuring a distance between a remote control apparatus, which has transmitted a request for a setting change, and the main body apparatus; a distance judging step of, when requests for a setting change are received from the plural remote control apparatuses, specifying a remote control apparatus closest to the main body apparatus; and a setting changing step of changing the setting in accordance with the request for a setting change from the closest remote control apparatus specified in the distance judging step.

Consequently, the main body apparatus accepts a request for a change from the closest remote control apparatus and does not accept a request for a change from the other distant remote control apparatuses. Thus, an unexpected setting change from a remote control apparatus in a distant location can be prevented.

Therefore, there is an advantage that, in the remote control system in which the plural remote control apparatuses are capable of making a setting change independently with respect to the main body apparatus and the main body apparatus and the remote control apparatuses may not be capable of communicating with each other, since a setting in the main body apparatus can be changed in accordance with a rule, a difference in settings in the main body apparatus and the respective remote control apparatuses can be prevented.

The main body apparatus for a remote control system in accordance with the invention is characterized by including: a request counting unit that holds requests for a setting change received from the remote control apparatuses and permits the setting change when a predetermined number of requests for a setting change with the identical contents are collected; and a setting changing unit that changes the setting when the change is permitted by the request counting unit.

The control method for a remote control system in accordance with the invention is characterized by including: a request counting step of holding requests for a setting change received from the remote control apparatuses and permitting the setting change when a predetermined number of requests for a setting change with the identical contents are collected; and a setting changing step of changing the setting when the change is permitted in the request counting step.

Consequently, when the main body apparatus receives requests for a setting change with identical contents from a predetermined number of remote control apparatuses, the main body apparatus executes the change. Thus, a request for a change from remote control apparatuses which do not satisfy the predetermined number is not executed.

Therefore, there is an advantage that, in the remote control system in which the plural remote control apparatuses are capable of making a setting change independently with respect to the main body apparatus and the main body apparatus and the remote control apparatuses may not be capable of communicating with each other, since a setting in the main body apparatus can be changed in accordance with a rule, a difference in settings in the main body apparatus and the respective remote control apparatuses can be prevented.

According to the remote control system in accordance with the invention, a setting in a main body apparatus and settings in respective remote control apparatuses can be synchronized. Thus, plural remote control apparatuses are capable of performing a setting change independently with respect to the main body apparatus. The invention can be used preferably in a remote control system in which a main body apparatus and remote control apparatuses may not be capable of communicating with each other, for example, a vehicle security system.

## Claims

1. A main body apparatus for a remote control system including a main body apparatus that performs a predetermined operation and plural remote control apparatuses that change a setting in the main body apparatus from remote locations, comprising:
a changing apparatus holding unit that stores apparatus identification information, which is capable of specifying a remote control apparatus that has changed a setting to a present setting, in a storage unit;
a communication possibility judging unit that judges whether communication with the other remote control apparatuses excluding the remote control apparatus, which has changed the setting to the present setting, is possible; and
a setting notifying unit that, when communication with the other remote control apparatuses has become possible, transmits setting information indicating a setting state of the main body apparatus itself to the remote control apparatuses.

2. A remote control apparatus for a remote control system including a main body apparatus that performs a predetermined operation and plural remote control apparatuses that change a setting in the main body apparatus from remote locations, comprising:
a setting acquiring unit that receives setting information indicating a setting state of the main body apparatus from the main body apparatus; and
a presentation unit that presents the setting information to a user.

3. A remote control apparatus for a remote control system including a main body apparatus that performs a predetermined operation and plural remote control apparatuses that change a setting in the main body apparatus from remote locations, comprising:
a setting acquiring unit that receives setting information indicating a setting state of the main body apparatus from the main body apparatus; and
a setting managing unit that stores the setting information in a storage unit.

4. A control method for a remote control system including a main body apparatus that performs a predetermined operation and plural remote control apparatuses that change a setting in the main body apparatus from remote locations, comprising:
a changing apparatus holding step of storing apparatus identification information capable of specifying a remote control apparatus that has changed a setting to a present setting;
a communication possibility judging step of judging whether communication between the main body apparatus and the other remote control apparatuses excluding the remote control apparatus, which has changed the setting to the present setting, is possible; and
a setting notifying step of, when communication with the other remote control apparatuses has become possible, transmitting setting information indicating a setting state of the main body apparatus to the remote control apparatuses.

5. A main body apparatus for a remote control system including a main body apparatus that performs a predetermined operation and plural remote control apparatuses that change a setting in the main body apparatus from remote locations, comprising:
a setting notification request acquiring unit that receives a notification request for setting information indicating a setting state of the main body apparatus itself from a remote control apparatus; and
a setting notifying unit that, when the notification request for setting information is received by the setting notification request acquiring unit from a remote control apparatus, transmits the setting information to the remote control apparatus.

6. A remote control apparatus for a remote control system including a main body apparatus that performs a predetermined operation and plural remote control apparatuses that change a setting in the main body apparatus from remote locations, comprising:
a setting notification requesting unit that transmits a notification request for setting information indicating a setting state of the main body apparatus to the main body apparatus; and
a setting acquiring unit that receives the setting information from the main body apparatus.

7. A remote control apparatus for a remote control system according to claim 6, further comprising a presentation unit that presents the setting information received from the main body apparatus to a user.

8. A remote control apparatus for a remote control system according to claim 6, further comprising a setting managing unit that stores the setting information received from the main body apparatus in a storage unit.

9. A control method for a remote control system including a main body apparatus that performs a predetermined operation and plural remote control apparatuses that change a setting in the main body apparatus from remote locations, comprising:
a setting notification requesting step of transmitting a notification request for setting information indicating a setting state of the main body apparatus from a remote control apparatus to the main body apparatus; and
a setting notifying step of transmitting the setting information from the main body apparatus to the remote control apparatus.

10. A main body apparatus for a remote control system including a main body apparatus that performs a predetermined operation and plural remote control apparatuses that change a setting in the main body apparatus from remote locations, comprising:
a communication possibility judging unit that judges whether communication with the remote control apparatuses is possible; and
a setting changing unit that, when a state in which communication with any one of the remote control apparatuses is impossible continues for a predetermined time, changes the setting in the main body apparatus itself to a defined value setting determined in advance.

11. A remote control apparatus for a remote control system including a main body apparatus that performs a predetermined operation and plural remote control apparatuses that change a setting in the main body apparatus from remote locations, comprising:
a communication possibility judging unit that judges whether communication with the main body apparatus is possible; and
a presentation unit that, when a state in which it is impossible to communicate with the main body apparatus continues for a predetermined time, presents an indication that the setting in the main body apparatus has been changed to a defined value setting determined in advance to a user.

12. A remote control apparatus for a remote control system including a main body apparatus that performs a predetermined operation and plural remote control apparatuses that change a setting in the main body apparatus from remote locations, comprising:
a communication possibility judging unit that judges whether communication with the main body apparatus is possible; and
a setting managing unit that, when a state in which it is impossible to communicate with the main body apparatus continues for a predetermined time, stores a defined value setting determined in advance in a storage unit as setting information indicating a setting state of the main body apparatus.

13. A control method for a remote control system including a main body apparatus that performs a predetermined operation and plural remote control apparatuses that change a setting in the main body apparatus from remote locations, comprising:
a communication possibility judging step of judging whether communication between the main body apparatus and the remote control apparatuses is possible; and
a setting changing step of, when a state in which communication between the main body apparatus and any one of the remote control apparatuses is impossible continues for a predetermined time, changing the setting in the main body apparatus to a defined value setting determined in advance.

14. A remote control apparatus for a remote control system including a main body apparatus that performs a predetermined operation and plural remote control apparatuses that change a setting in the main body apparatus from remote locations, comprising:
a change order managing unit that stores change order information, which is capable of specifying a sequencing relation between a change made by the remote control apparatus itself and a change made by another remote control apparatus, in a storage unit;
a change order information exchanging unit that exchanges the change order information with the another control apparatus;
a change order comparing unit that specifies a sequencing relation between a change made by the remote control apparatus itself and a change made by the another remote control apparatus on the basis of the change order information; and
a presentation unit that, when the change made by the another remote control apparatus is later than the change made by the remote control apparatus itself, presents an indication that the setting in the main body apparatus has been changed by the another remote control apparatus to a user.

15. A remote control apparatus for a remote control system including a main body apparatus that performs a predetermined operation and plural remote control apparatuses that change a setting in the main body apparatus from remote locations, comprising:
a change order managing unit that stores change order information, which is capable of specifying a sequencing relation between a change made by the remote control apparatus itself and a change made by another remote control apparatus, in a storage unit together with setting information indicating a setting state of the main body apparatus according to the change made by the remote control apparatus itself;
a change order information exchanging unit that exchanges the change order information with the another remote control apparatus;
a change order comparing unit that specifies a sequencing relation between a change made by the remote control apparatus itself and a change made by the another remote control apparatus on the basis of the change order information; and
a setting information correcting unit that, when the change made by the another remote control apparatus is later than the change made by the remote control apparatus itself, updates the setting information and the change order information in the storage unit according to setting information and change order information in the remote control apparatus.

16. A control method for a remote control system including a main body apparatus that performs a predetermined operation and plural remote control apparatuses that change a setting in the main body apparatus from remote locations, comprising:
a change order managing step of, in each of the remote control apparatuses, storing change order information, which is capable of specifying a sequencing relation between a change made by the remote control apparatus itself and a change made by another remote control apparatus;
a change order information exchanging step of, in each of the remote control apparatuses, exchanging the change order information with the another remote control apparatus; and
a change order comparing step of, in each of the remote control apparatuses, specifying a sequencing relation between a change made by the remote control apparatus itself and a change made by the another remote control apparatus on the basis of the change order information.

17. A main body apparatus for a remote control system including a main body apparatus that performs a predetermined operation and plural remote control apparatuses that change a setting in the main body apparatus from remote locations, comprising:
a priority holding unit that stores a priority given to a remote control apparatus, which has changed a setting to a present setting, in a storage unit; and
a priority comparing unit that, when a request for a setting change is received from a remote control apparatus, compares a priority given to the remote control apparatus and the priority stored in the storage unit and permits the setting change only when the priority given to the remote control apparatus is higher.

18. A control method for a remote control system including a main body apparatus that performs a predetermined operation and plural remote control apparatuses that change a setting in the main body apparatus from remote locations, comprising:
a priority holding step of storing a priority given to a remote control apparatus that has changed a setting to a present setting; and
a priority comparing step of, when the main body apparatus receives a request for a setting change from a remote control apparatus, compares a priority given to the remote control apparatus and the priority stored in the storage unit and permits the setting change only when the priority given to the remote control apparatus is higher.

19. A main body apparatus for a remote control system including a main body apparatus that performs a predetermined operation and plural remote control apparatuses that change a setting in the main body apparatus from remote locations, a range of a setting changeable from the remote control apparatus being set as an authority in each of the remote control apparatuses, comprising:
an authority judging unit that, when a request for a setting change is received from a remote control apparatus, permits the change when the remote control apparatus has an authority for the change; and
a setting change unit that changes the setting when the change is permitted by the authority judging unit.

20. A control method for a remote control system including a main body apparatus that performs a predetermined operation and plural remote control apparatuses that change a setting in the main body apparatus from remote locations, comprising:
an authority setting step of setting, in each of the remote control apparatuses, a range of setting changeable from the remote control apparatus as an authority;
an authority judging step of, when the main body apparatus receives a request for a setting change from a remote control apparatus, permitting the change when the remote control apparatus has an authority for the change; and
a setting change step of changing the setting when the change is permitted in the authority judging step.

21. A main body apparatus for a remote control system including a main body apparatus that performs a predetermined operation and plural remote control apparatuses that change a setting in the main body apparatus from remote locations, comprising:
a distance measuring unit that measures a distance between a remote control apparatus, which has transmitted a request for a setting change, and the main body apparatus itself;
a distance judging unit that, when requests for a setting change are received from the plural remote control apparatuses, specifies a remote control apparatus closest to the main body apparatus itself; and
a setting changing unit that changes the setting in accordance with the request for a setting change from the closest remote control apparatus specified by the distance judging unit.

22. A control method for a remote control system including a main body apparatus that performs a predetermined operation and plural remote control apparatuses that change a setting in the main body apparatus from remote locations, comprising:
a distance measuring step of measuring a distance between a remote control apparatus, which has transmitted a request for a setting change, and the main body apparatus;
a distance judging step of, when requests for a setting change are received from the plural remote control apparatuses, specifying a remote control apparatus closest to the main body apparatus; and
a setting changing step of changing the setting in accordance with the request for a setting change from the closest remote control apparatus specified in the distance judging step.

23. A main body apparatus for a remote control system including a main body apparatus that performs a predetermined operation and plural remote control apparatuses that change a setting in the main body apparatus from remote locations, comprising:
a request counting unit that holds requests for a setting change received from the remote control apparatuses and permits the setting change when a predetermined number of requests for a setting change with identical contents are collected; and
a setting changing unit that changes the setting when the change is permitted by the request counting unit.

24. A control method for a remote control system including a main body apparatus that performs a predetermined operation and plural remote control apparatuses that change a setting in the main body apparatus from remote locations, comprising:
a request counting step of holding requests for a setting change received from the remote control apparatuses and permitting the setting change when a predetermined number of requests for a setting change with identical contents are collected; and
a setting changing step of changing the setting when the change is permitted in the request counting step.
